# EUROPÄISCHE PATENTSCHRIFT

(11) **EP 2 877 537 B1**
(45) Veröffentlichungstag und Bekanntmachung des Hinweises auf die Patenterteilung: **18.01.2017**
(21) Anmeldenummer: 13741769.7
(22) Anmeldetag: 26.07.2013
(51) Int. Cl.: C08L 75/04, C08L 75/06, C09K 21/12, H01B 3/30

(54) **FLAMMGESCHÜTZTES THERMOPLASTISCHES POLYURETHAN AUF DER BASIS VON METALLHYDROXIDEN UND POLYESTEROLEN**
FLAME RETARDANT THERMOPLASTIC POLYURETHANE CONTAINING METAL HYDROXIDES AND POLYESTEROLS
POLYURÉTHANNE THERMOPLASTIQUE IGNIFUGE À BASE DE HYDROXYDES MÉTALLIQUES ET POLYESTEROLS

(30) Priorität: 27.07.2012 EP 12178239
(43) Veröffentlichungstag der Anmeldung: 03.06.2015
(73) Patentinhaber: BASF SE, 67056 Ludwigshafen am Rhein (DE)
(72) Erfinder: HENZE, Oliver, Steffen, 49448 Lemförde (DE); MÜHREN, Oliver, 49565 Bramsche (DE); BERTELS, Alfons, 49356 Diepholz (DE); MÖLLER, Sabine, 32351 Stemwede/Oppenwehe (DE)
(86) Internationale Anmeldenummer: PCT/EP2013/065791
(87) Internationale Veröffentlichungsnummer: WO 2014/016406

(56) Entgegenhaltungen:
- EP-A2- 0 389 768
- WO-A1-2010/069835
- WO-A1-2010/148574
- WO-A1-2011/050520
- US-A1- 2010 324 183
- US-A1- 2011 269 880
- US-B1- 6 395 823
- CHATTOPADHYAY ET AL: "Structural engineering of polyurethane coatings for high performance applications", PROGRESS IN POLYMER SCIENCE, PERGAMON PRESS, OXFORD, GB, Bd. 32, Nr. 3, 2. März 2007 (2007-03-02), Seiten 352-418, XP005911233, ISSN: 0079-6700, DOI: 10.1016/J.PROGPOLYMSCI.2006.05.003

## Beschreibung

Die vorliegende Erfindung betrifft Zusammensetzungen enthaltend mindestens ein thermoplastisches Polyurethan, mindestens ein Metallhydroxid und mindestens ein phosphorhaltiges Flammschutzmittel, wobei das thermoplastische Polyurethan ein auf mindestens einem Diisocyanat und mindestens einem Polyesterdiol basierendes thermoplastisches Polyurethan ist, das ein gewichtsmittleres Molekulargewicht im Bereich von 50.000 g/mol bis 200.000 g/mol, gemessen mittels GPC, aufweist.

Flammgeschützte thermoplastische Polyurethane sind seit langem bekannt. Für viele Anwendungen ist die Zugabe von Flammschutzmitteln notwendig. Dabei können den thermoplastischen Polyurethanen (TPU) sowohl halogenhaltige als auch halogenfreie Flammschutzmittel beigemischt werden. Die halogenfrei flammgeschützten thermoplastischen Polyurethane haben dabei in der Regel den Vorteil, dass sie beim Abbrennen weniger toxische und weniger korrosive Rauchgase entwickeln. Halogenfreie flammgeschützten TPU sind beispielsweise beschrieben in EP 0 617 079 A2, WO 2006/121549 A1 oder WO 03/066723 A2.

Zum halogenfreien Flammschutz von thermoplastischen Polyurethanen können stickstoffhaltige und/oder phosphorhaltige Flammschutzmittel verwendet werden, die beispielsweise in EP 0 617 079 A2, WO 2006/121549 A1 oder WO 03/066723 A2 offenbart werden. In WO 2006/121549 A1 werden beispielsweise flammgeschützte thermoplastische Polyurethane offenbart, die als Flammschutzmittel Phosphorverbindungen enthalten. Als geeignete thermoplastische Polyurethane werden auch solche genannt, die unter Verwendung von Polyestern, Polyethern, Polycarbonaten oder Mischungen davon hergestellt werden. Geeignete Polycarbonate werden ebenfalls offenbart. Die alleinige Verwendung von phosphorhaltigen Flammschutzmitteln kann häufig keinen ausreichenden Flammschutz gewährleisten. Die Verwendung von stickstoffhaltigen Flammschutzmitteln allein oder in Kombination mit phosphorhaltigen Flammschutzmitteln dagegen gibt ausweislich des Stands der Technik gut flammgeschützte thermoplastische Polyurethane, hat aber auch den Nachteil, dass durch die stickstoffhaltigen Verbindungen auch giftige Brandgase wie HCN oder Stickoxide freigesetzt werden können.

Zum halogenfreien Flammschutz von thermoplastischen Polyurethanen können auch Metallhydroxide allein oder in Kombination mit phosphorhaltigen Flammschutzmitteln und/oder Schichtsilikaten eingesetzt werden.

Auch EP 1 167 429 A1 betrifft flammgeschützte thermoplastische Polyurethane für Kabelmäntel. Die Zusammensetzungen enthalten ein Polyurethan, bevorzugt ein Polyether basiertes Polyurethan, Aluminium- oder Magnesium-Hydroxid und Phosphorsäureester.

Auch EP 1 491 580 A1 offenbart flammgeschützte thermoplastische Polyurethane für Kabelmäntel. Die Zusammensetzungen enthalten ein Polyurethan, insbesondere einen Polyether, Aluminium- oder Magnesium-Hydroxid, Phosphorsäureester sowie Schichtsilikate, beispielsweise Bentonit.

In EP 2 374 843 A1 werden beispielsweise flammgeschützte thermoplastische Polyurethane insbesondere auf Basis von Polyethern für Kabelmäntel mit guter Alterungsbeständigkeit offenbart. Die Zusammensetzungen enthalten ein Polyurethan und ein anorganisches Oxid. Als Flammschutzmittel sind Aluminium- oder Magnesium-Hydroxid, Phosphorsäureester, Schichtsilikate oder Mischungen davon genannt.

DE 103 43 121 A1 offenbart flammgeschützte thermoplastische Polyurethane, die ein Metallhydroxid enthalten, insbesondere Aluminium- und/oder Magnesium-Hydroxid. Die thermoplastischen Polyurethane sind durch ihr Molekulargewicht charakterisiert. Die Zusammensetzungen können weiter Phosphate oder Phosphonate enthalten. Bezüglich der Ausgangsstoffe für die Synthese der thermoplastischen Polyurethane werden als gegenüber Isocyanaten reaktive Verbindungen neben Polyesterolen und Polyetherolen auch Polycarbonatdiole offenbart, wobei Polyetherpolyole bevorzugt sind. Es werden keine Beispiele für Polycarbonatdiole genannt. Gemäß DE 103 43 121 A1 können statt eines Polyols auch Mischungen verschiedener Polyole eingesetzt werden. Darüber hinaus werden hohe Füllgrade offenbart, d.h. hohe Anteile an Metallhydroxiden und weiteren festen Komponenten im thermoplastischen Polyurethan, die zur Verschlechterung der mechanischen Eigenschaften führen.

Auch in WO 2011/050520 A1 werden flammgeschützte thermoplastische Polyurethane offenbart, die ein Metallhydrat und eine spezielle Phosphorverbindung als Flammschutzmittel enthalten. Als geeignete Metallhydrate werden Aluminium- und/oder Magnesium-Hydroxid genannt. Als geeignete thermoplastische Polyurethane werden in WO 2011/050520 A1 auch auf Polyestern basierende thermoplastische Polyurethane erwähnt, wobei die auf Polyesterdiolen basierenden thermoplastischen Polyurethane nur generell erwähnt werden und keine Beispiele genannt werden. Ebenso betreffen WO 2011/147068 A1 und WO 2011/150567 A1 flammgeschützte thermoplastische Polyurethane.

Ein Nachteil von Mischungen basierend auf thermoplastischen Polyurethanen in Kombination mit Metallhydroxiden ist eine geringe Alterungsbeständigkeit, die diese Materialen für viele Einsatzgebiete ungeeignet erscheinen lassen. Um die Alterungsbeständigkeit zu verbessern, werden beispielsweise gemäß EP 2 374 843 A1 schwer lösliche Oxide von zwei und dreiwertigen Metallen zugesetzt. Durch den Zusatz von weiteren Feststoffen verschlechtern sich jedoch die mechanischen Eigenschaften der thermoplastischen Polyurethane.

Ausgehend vom Stand der Technik lag der vorliegenden Erfindung demgemäß die Aufgabe zugrunde, flammgeschützte thermoplastische Polyurethane bereitzustellen, die eine gute Alterungsbeständigkeit aufweisen und gute Flammschutzeigenschaften zeigen.

Erfindungsgemäß wird diese Aufgabe gelöst durch eine Zusammensetzung enthaltend mindestens ein thermoplastisches Polyurethan, mindestens ein Metallhydroxid und mindestens ein phosphorhaltiges Flammschutzmittel, wobei das thermoplastische Polyurethan ein auf mindestens einem Diisocyanat und mindestens einem Polyesterdiol basierendes thermoplastisches Polyurethan ist, das ein gewichtsmittleres Molekulargewicht im Bereich von 50.000 g/mol bis 200.000 g/mol, gemessen mittels GPC, aufweist, wobei die Zusammensetzung mindestens ein Schichtsilikat oder Hydrotalkit oder Mischungen davon enthält.

Die Bestimmung des Molekulargewichts der thermoplastischen Polyurethane erfolgt dabei im Rahmen der vorliegenden Erfindung mittels GPC. Die Bestimmung des Molekulargewichts erfolgt gemäß Beispiel 1 (Zwei hintereinandergeschaltete GPC-Säulen: PSS-Gel; 100A; 5µ; 300*8mm, Jordi- Gel DVB; MixedBed; 5µ; 250*10mm; Säulentemperatur 60°C; Fluss 1 mL/min; RI-Detektor). Dabei erfolgt die Kalibrierung mit Polymethylmethacrylat (EasyCal; Fa. PSS, Mainz), als Laufmittel wird Dimethylformamid verwendet.

Es wurde überraschend gefunden, dass die erfindungsgemäßen Zusammensetzungen gegenüber den aus dem Stand der Technik bekannten Zusammensetzungen verbesserte Eigenschaften aufweisen, beispielsweise eine verbesserte Alterungsbeständigkeit. Darüber hinaus weisen die erfindungsgemäßen Zusammensetzungen gute Eigenschaften in Bezug auf die Rauchgasdichten auf sowie eine gute Flammwidrigkeit. Die mechanischen Eigenschaften der erfindungsgemäßen Zusammensetzungen sind ebenfalls gut. Ein Maß für die mechanischen Eigenschaften ist beispielsweise die Zugfestigkeit oder die Bruchdehnung der aus den erfindungsgemäßen Zusammensetzungen hergestellten Formkörper vor Alterung. Die Zugfestigkeit wird bestimmt gemäß DIN 53504.

Es wurde gefunden, dass die mechanischen Eigenschaften einer vergleichbaren Zusammensetzungen enthaltend ein thermoplastisches Polyurethan mit einem gewichtsmittleren Molekulargewicht unter 50.000 g/mol, gemessen mittels GPC, für viele Anwendungen nicht ausreichend sind. Vergleichbare Zusammensetzungen enthaltend ein thermoplastisches Polyurethan mit einem gewichtsmittleren Molekulargewicht über 200.000 g/mol, gemessen mittels GPC, sind schlecht zu verarbeiten, so dass auch diese für die meisten Anwendungen ungeeignet sind. Neben dem mindestens einem auf mindestens einem Diisocyanat und mindestens einem Polyesterdiol basierenden thermoplastischen Polyurethan, dem mindestens einen Metallhydroxid und dem mindestens einen phosphorhaltigen Flammschutzmittel kann die erfindungsgemäße Zusammensetzung weitere Zusatzstoffe enthalten.

Vorzugsweise weist die erfindungsgemäße Zusammensetzung keine anorganischen Oxide auf, wobei unter dem Begriff "anorganische Oxide" im Rahmen der vorliegenden Erfindung keine Metallhydroxide verstanden werden. Insbesondere enthalten die erfindungsgemäßen Zusammensetzungen vorzugsweise keine anorganischen Oxide von Magnesium, Calcium, Barium, Strontium, Bor, Aluminium und Zink.

Gemäß einer bevorzugten Ausführungsform betrifft die vorliegende Erfindung demgemäß Zusammensetzungen enthaltend mindestens ein thermoplastisches Polyurethan, mindestens ein Metallhydroxid und mindestens ein phosphorhaltiges Flammschutzmittel, wobei das thermoplastische Polyurethan ein auf mindestens einem Diisocyanat und mindestens einem Polyesterdiol basierendes thermoplastisches Polyurethan ist, das ein gewichtsmittleres Molekulargewicht im Bereich von 50.000 g/mol bis 200.000 g/mol, gemessen mittels GPC, aufweist, wie zuvor beschrieben, wobei die Zusammensetzung frei ist von anorganischen Oxiden von Magnesium, Calcium, Barium, Strontium, Bor, Aluminium und Zink.

Unter dem Begriff "frei von" wird im Rahmen der vorliegenden Erfindung verstanden, dass die Zusammensetzung weniger als 1000 ppm der jeweiligen Verbindung enthält.

Erfindungsgemäß enthält die Zusammensetzung als weitere Komponente mindestens ein Schichtsilikat oder Hydrotalkit oder Mischungen davon. Die Zusammensetzungen enthaltend mindestens ein Schichtsilikat oder Hydrotalkit oder Mischungen davon weisen insbesondere gute Flammschutzeigenschaften und eine gute Alterungsbeständigkeit auf.

Demgemäß betrifft die vorliegende Erfindung eine Zusammensetzung enthaltend mindestens ein thermoplastisches Polyurethan, mindestens ein Metallhydroxid, mindestens ein phosphorhaltiges Flammschutzmittel und mindestens ein Schichtsilikat oder Hydrotalkit oder Mischungen davon, wobei das thermoplastische Polyurethan ein auf mindestens einem Diisocyanat und mindestens einem Polyesterdiol basierendes thermoplastisches Polyurethan ist, das ein gewichtsmittleres Molekulargewicht im Bereich von 50.000 g/mol bis 200.000 g/mol, gemessen mittels GPC, aufweist.

### Schichtsilikate/Hydrotalkit

Grundsätzlich sind im Rahmen der vorliegenden Erfindung alle Schichtsilikate geeignet, beispielsweise Zweischicht-Minerale wie Kaolinit und Serpentin, Dreischicht-Minerale wie Montmorillonit oder Glimmer und Tonminerale wie Bentonite. Bevorzugt enthalten die erfindungsgemäßen Zusammensetzungen Bentonite oder Mischungen von Bentoniten und weiteren Schichtsilikaten oder Hydrotalkit.

Gemäß einer weiteren bevorzugten Ausführungsform werden interkalierte Schichtsilikate eingesetzt. Ausgangsschichtsilikate für diese interkalierten Schichtsilikate sind bevorzugt quellfähige Smectite, wie Montmorillonit, Hectorit, Saponit, Beidellit bzw. Bentonit.

Insbesondere geeignet sind im Rahmen der vorliegenden Erfindung organisch interkalierte Schichtsilikate, die einen Schichtabstand von etwa 1,5 nm bis 4 nm haben. Vorzugsweise sind diese Schichtsilicate mit quaternären Ammoniumverbindungen, protonierten Aminen, organischen Phosphoniumionen und/oder Aminocarbonsäuren interkaliert.

Die erfindungsgemäße Zusammensetzung kann auch Hydrotalkit oder mindestens ein Schichtsilikat und Hydrotalkit enthalten. Auch Hydrokalkit besitzt einen Schichtaufbau. Zu Hydrotalkit gehören auch Comblainit, Desautelsit, Pyroaurit, Reevesit, Sergeevit, Stichtit und Takovit. Ein im Rahmen der vorliegenden Erfindung bevorzugtes Hydrotalkit basiert auf Aluminium und Magnesium und ist mit Hydroxid, Nitrat und/oder Carbonationen in den Zwischenschichten neutralisiert. Ein erfindungsgemäß bevorzugter Hydrotalkit weist die Summenformel Mg₆Al₂[(OH)₁₆|CO₃] • 4H₂O auf.

Die in den erfindungsgemäßen Zusammensetzungen enthaltenen Hydrotalkite sind bevorzugt organisch interkaliert, das heißt die Anionen, die sich in den Zwischenschichten befinden, bevorzugt das Hydroxid-Kation, werden zumindest teilweise durch organische Anionen ausgetauscht. Im Rahmen der vorliegenden Erfindung bevorzugte organische Anionen sind Anionen von Fettsäuren und/oder hydrierten Fettsäuren.

Organisch interkalierte Schichtsilikate und organisch interkalierte Hydrotalkite lassen sich in den erfindungsgemäßen Zusammensetzungen gut verarbeiten. Beispielsweise wird bei der Vermischung von organisch interkalierten Schichtsilikaten und/oder organisch interkalierten Hydrotalkiten mit dem thermoplastischen Polyurethan eine gleichmäßige Verteilung der Schichtsilikate und/oder des Hydrotalkits erreicht.

Demgemäß betrifft die vorliegende Erfindung gemäß einer bevorzugten Ausführungsform auch Zusammensetzungen enthaltend mindestens ein thermoplastisches Polyurethan, mindestens ein Metallhydroxid und mindestens ein phosphorhaltiges Flammschutzmittel, wobei das thermoplastische Polyurethan ein auf mindestens einem Diisocyanat und mindestens einem Polyesterdiol basierendes thermoplastisches Polyurethan ist, das ein gewichtsmittleres Molekulargewicht im Bereich von 50.000 g/mol bis 200.000 g/mol, gemessen mittels GPC, aufweist, wie zuvor beschrieben, die mindestens ein Schichtsilikat oder Hydrotalkit oder Mischungen davon enthält, wobei das Schichtsilikat ein organisch interkaliertes Schichtsilikat ist und/oder der Hydrotalkit ein organisch interkalierter Hydrotalkit ist.

Gemäß einer weiteren bevorzugten Ausführungsform betrifft die vorliegende Erfindung auch Zusammensetzungen enthaltend mindestens ein thermoplastisches Polyurethan, mindestens ein Metallhydroxid und mindestens ein phosphorhaltiges Flammschutzmittel, wobei das thermoplastische Polyurethan ein auf mindestens einem Diisocyanat und mindestens einem Polyesterdiol basierendes thermoplastisches Polyurethan ist, das ein gewichtsmittleres Molekulargewicht im Bereich von 50.000 g/mol bis 200.000 g/mol, gemessen mittels GPC, aufweist, wie zuvor beschrieben, wobei das Schichtsilikat Bentonit ist.

Das mindestens eine Schichtsilikat oder Hydrotalkit oder die Mischung davon ist in der erfindungsgemäßen Zusammensetzung vorzugsweise in einer Menge im Bereich von 0,5 Gew.-% bis 20 Gew.-%, bevorzugt 3 Gew.- % bis 15 Gew.- %, und besonders bevorzugt mit 3 Gew.- % bis 8 Gew.- %, jeweils bezogen auf die gesamte Zusammensetzung, enthalten.

Demgemäß betrifft die vorliegende Erfindung gemäß einer weiteren bevorzugten Ausführungsform auch Zusammensetzungen enthaltend mindestens ein thermoplastisches Polyurethan, mindestens ein Metallhydroxid und mindestens ein phosphorhaltiges Flammschutzmittel, wobei das thermoplastische Polyurethan ein auf mindestens einem Diisocyanat und mindestens einem Polyesterdiol basierendes thermoplastisches Polyurethan ist, das ein gewichtsmittleres Molekulargewicht im Bereich von 50.000 g/mol bis 200.000 g/mol, gemessen mittels GPC, aufweist, wie zuvor beschrieben, wobei das mindestens eine Schichtsilikat oder Hydrotalkit oder die Mischung davon in einer Mengen im Bereich von 0,5 Gew.-% bis 20 Gew.-%, bezogen auf die gesamte Zusammensetzung, enthalten ist.

Alle weiteren Gewichtsangaben der Bestandteile beziehen sich soweit nicht anders angegeben ebenfalls auf die gesamte Zusammensetzung. Dabei wird die Menge der in der Zusammensetzung enthaltenen Komponenten so gewählt, dass die Summe aller Komponenten der Zusammensetzung soweit nicht anders angegeben 100% Gew.-% ergibt.

### Thermoplastische Polyurethane

Thermoplastische Polyurethane sind grundsätzlich bekannt. Die Herstellung erfolgt üblicher Weise durch Umsetzung der Komponenten (a) Isocyanaten und (b) gegenüber Isocyanaten reaktiven Verbindungen und gegebenenfalls (c) Kettenverlängerungsmitteln gegebenenfalls in Gegenwart von mindestens einem (d) Katalysator und/oder (e) üblichen Hilfsstoffen und/oder Zusatzstoffen. Die Komponenten (a) Isocyanat, (b) gegenüber Isocyanaten reaktive Verbindungen, (c) Kettenverlängerungsmittel werden einzeln oder zusammen auch als Aufbaukomponenten angesprochen.

Die erfindungsgemäßen Zusammensetzungen enthalten mindestens ein auf mindestens einem Diisocyanat und mindestens einem Polyesterdiol basierendes thermoplastisches Polyurethan, das ein gewichtsmittleres Molekulargewicht im Bereich von 50.000 g/mol bis 200.000 g/mol, gemessen mittels GPC, aufweist. Demgemäß wird zur Herstellung der in den erfindungsgemäßen Zusammensetzungen enthaltenen Polyurethanen als Komponente (b) mindestens ein Polyesterdiol eingesetzt.

Als organische Isocyanate (a) werden bevorzugt aliphatische, cycloaliphatische, araliphatische und/oder aromatische Isocyanate eingesetzt, besonders bevorzugt aromatische Isocyanate. Weiter bevorzugt sind Tri-, Tetra-, Penta-, Hexa-, Hepta- und/oder Oktamethylendüsocyanat, 2-Methyl-pentamethylen-diisocyanat-1,5, 2-Ethyl-butylen-diisocyanat-1,4, Pentamethylendiisocyanat-1,5, Butylen-diisocyanat-1,4, 1-Isocyanato-3,3,5-trimethyl-5-isocyanatomethylcyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder-2,6-cyclohexan-diisocyanat und/oder 4,4'-, 2,4'- und 2,2'-Dicyclohexylmethan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat. Besonders bevorzugt wird 4,4'MDI eingesetzt.

Demgemäß betrifft die vorliegende Erfindung gemäß einer bevorzugten Ausführungsform auch eine Zusammensetzung enthaltend mindestens ein thermoplastisches Polyurethan, mindestens ein Metallhydroxid und mindestens ein phosphorhaltiges Flammschutzmittel, wobei das thermoplastische Polyurethan ein auf mindestens einem Diisocyanat und mindestens einem Polyesterdiol basierendes thermoplastisches Polyurethan ist, das ein gewichtsmittleres Molekulargewicht im Bereich von 50.000 g/mol bis 200.000 g/mol, gemessen mittels GPC, aufweist, wie zuvor beschrieben, wobei das Diisocyanat ein aromatisches Diisocyanat ist.

Als gegenüber Isocyanaten reaktive Verbindungen (b) wird erfindungsgemäß mindestens ein Polyesterdiol eingesetzt.

Grundsätzlich können erfindungsgemäß alle geeigneten Polyesterdiole eingesetzt werden.

Geeignete Polyesterdiole können beispielsweise aus organischen Dicarbonsäuren mit 2 bis 12 Kohlenstoffatomen, vorzugsweise aromatischen Dicarbonsäuren mit 8 bis 12 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure und Phthalsäure, Isophthalsäure, Terephthalsäure und die isomeren Naphthalindicarbonsäuren. Die Dicarbonsäuren können dabei sowohl einzeln als auch im Gemisch untereinander verwendet werden. Anstelle der freien Dicarbonsäuren können auch die entsprechenden Dicarbonsäurederivate, wie beispielsweise Dicarbonsäureester von Alkoholen mit 1 bis 4 Kohlenstoffatomen oder Dicarbonsäureanhydride eingesetzt werden. Beispiele für zwei- und mehrwertige Alkohole, insbesondere Diole sind Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan, bevorzugt Ethylenglycol, Propandiol-1,3, Methylpropandiol-1,3, 1,4-Butandiol, 3-Methylpentandiol-1,5 oder 1,6-Hexandiol. Erfindungsgemäß geeignet sind beispielsweise auch Polyesterdiole aus Lactonen, beispielsweise ε-Caprolacton oder Hydroxycarbonsäuren, z.B. ω-Hydroxycapronsäure und Hydroxybenzoesäuren.

Die Umsetzungsbedingungen von Carbonsäure und Alkohol werden üblicherweise so gewählt, dass die resultierenden Polyesterole keine freien Säuregruppen aufweisen. Üblicherweise weisen die resultierende Polyesterole eine tatsächliche Funktionalität von 1,9 bis 2,1, bevorzugt von 2,0 auf.

Zur Herstellung der Polyesterole können die Mischungen aus Säuren und Alkoholen katalysatorfrei oder vorzugsweise in Gegenwart von Veresterungskatalysatoren, zweckmäßigerweise in einer Atmosphäre aus Inertgasen, wie z.B. Stickstoff, Kohlenmonoxid, Helium oder Argon polykondensiert werden. Die Polykondensation kann bei Temperaturen von 150 bis 250 °C, vorzugsweise 180 bis 220 °C gegebenenfalls unter vermindertem Druck, erfolgen. Die Polykondensation wird üblicherweise bis zu einer gewünschten Säurezahl, die vorteilhafterweise kleiner als 10, vorzugsweise kleiner als 2 ist, fortgeführt. Zur Herstellung der Polyesterole werden Säuren und Alkohole üblicherweise im Molverhältnis von 1:1 bis 1,8, vorzugsweise 1:1,05 bis 1,2 polykondensiert.

Insbesondere werden im Rahmen der vorliegenden Erfindung bevorzugt Polyesterdiole aus ε-Caprolacton und Kondensationsprodukte von Adipinsäure oder Sebacinsäure mit mindestens einem Alkohol ausgewählt aus der Gruppe bestehend aus Ethylenglycol, Propandiol-1,3, Methylpropandiol-1,3, 1,4-Butandiol, 3-Methylpentandiol-1,5 oder 1,6-Hexandiol als Polyesterdiole eingesetzt.

Demgemäß betrifft die vorliegende Erfindung gemäß einer bevorzugten Ausführungsform auch eine Zusammensetzung enthaltend mindestens ein thermoplastisches Polyurethan, mindestens ein Metallhydroxid und mindestens ein phosphorhaltiges Flammschutzmittel, wobei das thermoplastische Polyurethan ein auf mindestens einem Diisocyanat und mindestens einem Polyesterdiol basierendes thermoplastisches Polyurethan ist, das ein gewichtsmittleres Molekulargewicht im Bereich von 50.000 g/mol bis 200.000 g/mol, gemessen mittels GPC, aufweist, wie zuvor beschrieben, wobei das Polyesterdiol ausgewählt ist aus Polyesterdiolen aus ε-Caprolacton und Kondensationsprodukten von Adipinsäure oder Sebacinsäure mit mindestens einem Alkohol ausgewählt aus der Gruppe bestehend aus Ethylenglycol, Propandiol-1,3, Methylpropandiol-1,3, 1,4-Butandiol, 3-Methylpentandiol-1,5 oder 1,6-Hexandiol.

Gemäß einer weiteren bevorzugten Ausführungsform betrifft die vorliegende Erfindung auch Zusammensetzungen wie zuvor beschrieben enthaltend mindestens ein auf mindestens einem Diisocyanat und mindestens einem Polyesterdiol basierendes thermoplastisches Polyurethan, das ein gewichtsmittleres Molekulargewicht im Bereich von 50.000 g/mol bis 200.000 g/mol, gemessen mittels GPC, aufweist, wobei das Polyesterdiol ausgewählt ist aus Polyesterdiolen aus ε-Caprolacton und Kondensationsprodukten von Adipinsäure oder Sebacinsäure mit mindestens einem Alkohol ausgewählt aus der Gruppe bestehend aus Ethylenglycol, Propandiol-1,3, Methylpropandiol-1,3, 1,4-Butandiol, 3-Methylpentandiol-1,5 oder 1,6-Hexandiol und das Diisocyanat ein aromatisches Diisocyanat ist.

Vorzugsweise weisen die eingesetzten Polyesterdiole ein zahlenmittleres Molekulargewichte Mn im Bereich von 500 bis 4000, bestimmt über GPC, bevorzugt im Bereich von 650 bis 3500, bestimmt über GPC, besonders bevorzugt im Bereich von 800 bis 3000, bestimmt über GPC auf. Geeignete Bedingungen für die Molekulargewichtsbestimmung mittels GPC sind dem Fachmann bekannt.

Als Kettenverlängerungsmittel (c) können bevorzugt aliphatische, araliphatische, aromatische und/oder cycloaliphatische Verbindungen mit einem Molekulargewicht von 0,05 kg/mol bis 0,499 kg/mol, bevorzugt 2-funktionelle Verbindungen, eingesetzt werden, beispielsweise Diamine und/oder Alkandiole mit 2 bis 10 C-Atomen im Alkylenrest, Di-, Tri-, Tetra-, Penta-, Hexa-, Hepta-, Okta-, Nona- und/oder Dekaalkylenglykole mit 3 bis 8 Kohlenstoffatomen insbesondere 1,2-Ethylenglydkol, 1,3-Propandiol, 1,4-Butandiol, 1,6-Hexandiol, bevorzugt entsprechende Oligo- und/oder Polypropylenglykole, wobei auch Mischungen der Kettenverlängerer eingesetzt werden können. Bevorzugt haben die Verbindungen (c) nur primäre Hydroxylgruppen, ganz besonders bevorzugt ist 1,4-Butandiol.

Katalysatoren (d) welche insbesondere die Reaktion zwischen den NCO-Gruppen der Diisocyanate (a) und den Hydroxylgruppen der gegenüber Isocyanaten reaktiven Verbindung (b) und dem Kettenverlängerungsmittel (c) beschleunigen, sind in einer bevorzugten Ausführungsform tertiären Amine, insbesondere Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan, in einer anderen bevorzugten Ausführungsform sind dies organische Metallverbindungen wie Titansäureester, Eisenverbindungen, bevorzugt Eisen-(III)- acetylacetonat, Zinnverbindungen, bevorzugt Zinndiacetat, Zinndioctoat, Zinndilaurat oder die Zinndialkylsalze aliphatischer Carbonsäuren, bevorzugt Dibutylzinndiacetat, Dibutylzinndilaurat oder Bismutsalzen in denen Bismut bevorzugt in den Oxidationsstufen 2 oder 3 vorliegt, insbesondere 3. Bevorzugt sind Salze von Carbonsäuren. Als Carbonsäuren werden bevorzugt Carbonsäuren mit 6 bis 14 Kohlenstoffatomen, besonders bevorzugt mit 8 bis 12 Kohlenstoffatomen verwendet. Beispiele für geeignete Bismutsalze sind Bismut(III)-neodecanoat, Bismut-2-etyhlhexanoat und Bismut-octanoat. Die Katalysatoren (d) werden bevorzugt in Mengen von 0,0001 bis 0,1 Gew.-Teilen pro 100 Gew.-Teile der mit Isocyanten reakiven Verbindung (b) eingesetzt. Bevorzugt werden Zinnkataylsatoren eingesetzt, insbesondere Zinndioktoat.

Neben Katalysatoren (d) können den Aufbaukomponenten (a) bis (c) auch übliche Hilfsstoffe (e) hinzugefügt werden. Genannt seien beispielsweise oberflächenaktive Substanzen, Füllstoffe, weitere Flammschutzmittel, Keimbildungsmittel, Oxidationsstabilisatoren, Gleit- und Entformungshilfen, Farbstoffe und Pigmente, gegebenenfalls Stabilisatoren, z.B. gegen Hydrolyse, Licht, Hitze oder Verfärbung, anorganische und/oder organische Füllstoffe, Verstärkungsmittel und Weichmacher. Geeignete Hilfs- und Zusatzstoffe können beispielsweise dem Kunststoffhandbuch, Band VII, herausgegeben von Vieweg und Höchtlen, Carl Hanser Verlag, München 1966 (S103-113) entnommen werden.

Geeignete Herstellungsverfahren für thermoplastische Polyurethane werden beispielsweise offenbart in EP 0922552 A1, DE 10103424 A1 oder WO 2006/072461 A1. Die Herstellung erfolgt üblicherweise auf einer Bandanlage oder einem Reaktionsextruder, kann aber auch im Labormaßstab, beispielsweise im Handgußverfahren, erfolgen. In Abhängigkeit der stofflichen Eigenschaften der Komponente werden diese alle unmittelbar miteinander vermischt oder es werden einzelne Komponenten vorvermischt und/oder vorreagiert, z.B. zu Präpolymeren, und dann erst zur Polyaddition gebracht. In einer weiteren Ausführungsform wird zunächst ein thermoplastisches Polyurethan aus den Aufbaukomponenten, ggf. mit Katalysator hergestellt, in das ggf. noch Hilfsstoffe eingearbeitet sein können. In dieses Material wird dann wenigstens ein Flammschutzmittel eingebracht und homogen verteilt. Das homogene Verteilen erfolgt vorzugsweise in einem Extruder, bevorzugt in einem Zweiwellenextruder. Zur Einstellung von Härte der TPU können die eingesetzten Mengen der Aufbaukomponenten (b) und (c) in relativ breiten molaren Verhältnissen variiert werden, wobei die Härte üblicherweise mit zunehmendem Gehalt an Kettenverlängerungsmittel (c) ansteigt.

Zur Herstellung von thermoplastischen Polyurethanen, z.B. solchen mit einer Härte Shore A von kleiner als 95, vorzugsweise von 95 bis 75 Shore A, besonders bevorzugt etwa 85 A, können beispielsweise die im wesentlichen difunktionellen Polyhydroxylverbindungen (b) und Kettenverlängerer (c) vorteilhafterweise in Molverhältnissen von 1:1 bis 1:5, vorzugsweise 1:1,5 bis 1:4,5 verwendet werden, so dass die resultierenden Mischungen aus den Aufbaukomponenten (b) und (c) ein Hydroxyläquivalentgewicht von größer als 200, und insbesondere von 230 bis 450, besitzen, während zur Herstellung von härteren TPU, z.B. solchen mit einer Härte Shore A von größer als 98, vorzugsweise von 55 bis 75 Shore D, die Molverhältnisse von (b):(c) im Bereich von 1:5,5 bis 1:15, vorzugsweise von 1:6 bis 1:12, liegen, so dass die erhaltenen Mischungen aus (b) und (c) ein Hydroxyläquivalentgewicht von 110 bis 200, vorzugsweise von 120 bis 180, aufweisen.

Zur Herstellung der erfindungsgemäßen thermoplastischen Polyurethane werden die Aufbaukomponenten (a), (b) und (c) bevorzugt in Gegenwart von Katalysatoren (d) und gegebenenfalls Hilfsmitteln und/ oder Zusatzstoffen (e) in solchen Mengen zur Reaktion gebracht, dass das Äquivalenzverhältnis von NCO-Gruppen der Diisocyanate (a) zur Summe der Hydroxylgruppen der Aufbaukomponenten (b) und (c) 0,9 bis 1,1 : 1, vorzugsweise 0,95 bis 1,05 : 1 und insbesondere ungefähr 0,96 bis 1,0 : 1 beträgt.

Die erfindungsgemäße Zusammensetzung enthält das mindestens eine thermoplastische Polyurethan in einer Menge im Bereich von 20 Gew.- % bis 90 Gew.-%, bezogen auf die gesamte Zusammensetzung, bevorzugt im Bereich von 30 Gew.-% bis 75 Gew.-%, weiter bevorzugt im Bereich von 40 Gew.- % bis 60 Gew.- % und besonders bevorzugt im Bereich von 45 Gew.-% bis 55 Gew.-%, jeweils bezogen auf die gesamte Zusammensetzung.

In einer Ausführungsform werden zur Herstellung der erfindungsgemäßen Zusammensetzungen thermoplastisches Polyurethan und Flammschutzmittel in einem Arbeitsschritt verarbeitet. In anderen bevorzugten Ausführungsformen wird zur Herstellung der erfindungsgemäßen Zusammensetzungen zunächst mit einem Reaktionsextruder, einer Bandanlage oder sonstigen geeigneten Vorrichtungen ein thermoplastisches Polyurethan hergestellt, bevorzugt als Granulat, in das dann in mindestens einem weiteren Arbeitsschritt, oder auch mehreren Arbeitsschritten, mindestens ein weiteres Flammschutzmittel eingebracht wird.

Das Vermischen des thermoplastischen Polyurethans mit dem mindestens einen Flammschutzmittel, insbesondere mit dem mindestens einen Metallhydroxid, dem mindestens einen phosphorhaltigen Flammschutzmittel, und gegebenenfalls mit mindestens einem Schichtsilikat und/oder Hydrotalkit erfolgt in einer Mischeinrichtung, die bevorzugt ein Innen-Kneter oder ein Extruder, bevorzugt ein Zweiwellenextruder, ist. Das Metallhydroxid ist bevorzugt ein Aluminiumhydroxid. In einer bevorzugten Ausführungsform ist zumindest ein in die Mischeinrichtung in dem mindestens einem weiteren Arbeitsschritt eingebrachte Flammschutzmittel flüssig, d.h. flüssig bei einer Temperatur von 21 °C. In einer anderen bevorzugten Ausführungsform der Verwendung eines Extruder ist das eingebrachte Flammschutzmittel bei einer Temperatur flüssig, die in Fließrichtung des Füllgutes in dem Extruders hinter dem Einfüllpunkt herrscht.

Erfindungsgemäß weist das thermoplastische Polyurethan in der erfindungsgemäßen Zusammensetzung ein gewichtsmittleres Molekulargewicht im Bereich von 50.000 g/mol bis 200.000 g/mol auf. Dies Molekulargewicht ist das Molekulargewicht des thermoplastischen Polyurethans in der Zusammensetzung, d.h. nach der Herstellung der erfindungsgemäßen Zusammensetzung. Das Molekulargewicht des thermoplastischen Polyurethans in der erfindungsgemäßen Zusammensetzung kann von dem Molekulargewicht des zur Herstellung der erfindungsgemäßen Zusammensetzung eingesetzten thermoplastischen Polyurethans abweichen. Vorzugsweise liegt das gewichtsmittlere Molekulargewicht des mindestens einen thermoplastischen Polyurethans in der erfindungsgemäßen Zusammensetzung im Bereich von 60.000 g/mol bis 150.000 g/mol, bevorzugt im Bereich von 70.000 g/mol bis 135.000 g/mol, besonders bevorzugt von 80.000 g/mol bis 120.000 g/mol, weiter bevorzugt im Bereich von 90.000 g/mol bis 110.000 g/mol.

Wie zuvor beschrieben erfolgt die Bestimmung des Molekulargewichts der thermoplastischen Polyurethane erfolgt dabei im Rahmen der vorliegenden Erfindung mittels GPC gemäß Beispiel 1 (Zwei hintereinandergeschaltete GPC-Säulen: PSS-Gel; 100A; 5µ; 300*8mm, Jordi- Gel DVB; MixedBed; 5µ; 250*10mm; Säulentemperatur 60°C; Fluss 1 mL/min; RI-Detektor). Dabei erfolgt die Kalibrierung mit Polymethylmethacrylat (EasyCal; Fa. PSS, Mainz), als Laufmittel wird Dimethylformamid verwendet.

Gemäß einer weiteren bevorzugten Ausführungsform betrifft die vorliegende Erfindung demgemäß auch eine Zusammensetzung enthaltend mindestens ein thermoplastisches Polyurethan, mindestens ein Metallhydroxid und mindestens ein phosphorhaltiges Flammschutzmittel, wie zuvor beschrieben, wobei das thermoplastische Polyurethan ein auf mindestens einem Diisocyanat und mindestens einem Polyesterdiol basierendes thermoplastisches Polyurethan ist, das ein gewichtsmittleres Molekulargewicht im Bereich von 90.000 g/mol bis 110.000 g/mol, gemessen mittels GPC, aufweist.

### Metallhydroxid

Die erfindungsgemäße Zusammensetzung enthält mindestens ein Metallhydroxid. Im Brandfall setzten Metallhydroxide ausschließlich Wasser frei und bilden daher keine toxischen oder korrosiven Rauchgasprodukte. Darüber hinaus sind diese Hydroxide in der Lage, die Rauchgasdichte im Brandfall zu reduzieren. Nachteil dieser Substanzen ist jedoch, dass sie gegebenenfalls die Hydrolyse von thermoplastischen Polyurethanen fördern und auch die oxidative Alterung der Polyurethane beeinflussen.

Geeignet sind im Rahmen der vorliegenden Erfindung vorzugsweise Hydroxide des Magnesiums, Calciums, Zinks und/oder Aluminiums oder Mischungen dieser. Besonders bevorzugt ist das Metallhydroxid ausgewählt ist aus der Gruppe bestehend aus Aluminiumhydroxiden, Aluminiumoxidhydroxiden, Magnesiumhydroxid und einer Mischung aus zwei oder mehr dieser Hydroxide.

Demgemäß betrifft die vorliegende Erfindung gemäß einer weiteren Ausführungsform auch Zusammensetzungen enthaltend mindestens ein thermoplastisches Polyurethan, mindestens ein Metallhydroxid und mindestens ein phosphorhaltiges Flammschutzmittel, wobei das thermoplastische Polyurethan ein auf mindestens einem Diisocyanat und mindestens einem Polyesterdiol basierendes thermoplastisches Polyurethan ist, das ein gewichtsmittleres Molekulargewicht im Bereich von 50.000 g/mol bis 200.000 g/mol, gemessen mittels GPC, aufweist, wie zuvor beschrieben, wobei das Metallhydroxid ausgewählt ist aus der Gruppe bestehend aus Aluminiumhydroxiden, Aluminiumoxidhydroxiden, Magnesiumhydroxid und einer Mischung aus zwei oder mehr dieser Hydroxide.

Eine bevorzugte Mischung ist Aluminiumhydroxid und Magnesiumhydroxid. Besonders bevorzugt ist Magnesiumhydroxid oder Aluminiumhydroxid. Ganz besonders bevorzugt ist Aluminiumhydroxid.

Demgemäß betrifft die vorliegende Erfindung gemäß einer weiteren Ausführungsform auch eine Zusammensetzung enthaltend mindestens ein thermoplastisches Polyurethan, mindestens ein Metallhydroxid und mindestens ein phosphorhaltiges Flammschutzmittel, wobei das thermoplastische Polyurethan ein auf mindestens einem Diisocyanat und mindestens einem Polyesterdiol basierendes thermoplastisches Polyurethan ist, das ein gewichtsmittleres Molekulargewicht im Bereich von 50.000 g/mol bis 200.000 g/mol, gemessen mittels GPC, aufweist, wie zuvor beschrieben, wobei das Metallhydroxid Alumiuniumhydroxid ist.

Der Anteil des mindestens einen Metallhydroxids in den erfindungsgemäßen Zusammensetzungen liegt vorzugsweise im Bereich von 10 Gew.-% bis 80 Gew.-%. Bei höheren Füllgraden verschlechtern sich die mechanischen Eigenschaften der entsprechenden Polymerwerkstoffe in einer nicht akzeptablen Weise. So gehen insbesondere die für die Kabelisolierung wichtige Zugfestigkeit und Reißdehnung auf ein nicht akzeptables Maß zurück. Bevorzugt ist der Anteil des Metallhydroxids in der erfindungsgemäßen Zusammensetzung im Bereich von 10 Gew.-% bis 65 Gew.-%, weiter bevorzugt im Bereich von 20 Gew.-% bis 50 Gew.-%, weiter bevorzugt im Bereich von 25 Gew.-% bis 40 Gew.-%, jeweils bezogen auf die gesamte Zusammensetzung.

Die erfindungsgemäß eingesetzten Metallhydroxide haben üblicherweise eine spezifische Oberfläche von 2 m²/g bis 150 m²/g, bevorzugt liegt die spezifische Oberfläche jedoch zwischen 2 m²/g und 9 m²/g, weiter bevorzugt zwischen 3 m²/g und 8 m²/g, besonders bevorzugt zwischen 3 m²/g und 5 m²/g. Die spezifische Oberfläche wird mit dem BET Verfahren nach DIN ISO 9277:2003-05 mit Stickstoff bestimmt.

### Beschichtete Metallhydroxide

Erfindungsgemäß kann die Oberfläche der Metallhydroxide zumindest teilweise von einer Hülle umgeben sein, auch als zumindest teilweise Umhüllung bezeichnet. Die Hülle ist gleichzusetzen mit dem häufig verwendeten Begriff *Coating* oder Oberflächenbehandlung. Die Hülle haftet entweder durch Formschluss oder van-der Waals-Kräften rein physikalisch auf dem Metallhydroxid, oder sie ist chemisch mit dem Metallhydroxid verbunden. Dies geschieht überwiegend durch kovalente Wechselwirkung.

Die Oberflächenbehandlung oder auch Oberflächenmodifikation, die zu einer Hülle um das eingeschlossene Teil, in vorliegendem Fall das Metallhydroxid, insbesondere das Aluminiumhydroxid führt, wird ausführlich in der Literatur beschrieben. Ein Basiswerk in dem geeignete Materialien als auch die Beschichtungstechnik beschrieben wird, ist "Particulate-Filled Polymer Composites (2nd Edition), edited by: Rothon, Roger N., 2003, Smithers Rapra Technology. Besonders relevant ist das Kapitel 4. Entsprechende Materialien sind kommerziell erhältlich, z.B. bei der Firma Nabaltec, Schwandorf oder Martinswerke in Bergheim, beide in Deutschland.

Bevorzugte Beschichtungsmaterialien sind gesättigte oder ungesättigte Polymere mit Säurefunktion, bevorzugt mit mindestens einer Acrylsäure oder einem Säureanhydrid, bevorzugt Maleinsäureanhydrid, da sich diese besonders gut an die Oberfläche des Metallhydroxides anlagern.

Bei dem Polymer handelt es sich um ein Polymer oder Mischungen von Polymeren, bevorzugt ist ein Polymer. Bevorzugte Polymere sind Polymere von Mono- und Diolefinen, Mischungen hiervon, Copolymere von Mono- und Diolefinen untereinander oder mit anderen Vinylmonomeren, Polystyrol, Poly(p-methylstyrol), Poly-(alpha-methylstyrol), Copolymere von Styrol oder alpha-Methylstyrol mit Dienen oder Acrylderivaten, Propfcopolymere von Styrol oder alpha-Methylstyrol, halogenhaltige Polymere, Polymere, die sich von alpha-, beta-ungesättigten Säuren und deren Derivaten ableiten, und Copolymere dieser Monomere untereinander oder mit anderen ungesättigten Monomeren.

Ebenfalls bevorzugte Beschichtungsmaterialien sind monomere organische Säuren und ihre Salze, bevorzugt gesättigte Fettsäuren, weniger gebräuchlich sind ungesättigte Säuren. Bevorzugte Fettsäuren umfassen 10 bis 30 Kohlenstoffatome, bevorzugt 12 bis 22, insbesondere 16 bis 20 Kohlenstoffatom, sie sind aliphatisch und haben bevorzugt keine Doppelbindungen. Ganz besonders bevorzugt ist die Stearinsäure. Bevorzugte Fettsäurederivate sind ihre Salze, bevorzugt Calcium, Aluminium, Magnesium oder Zink. Besonders bevorzugt ist Calcium, insbesondere als Calciumstearat.

Andere bevorzugte Stoffe die eine Hülle um das Metallhydroxid, bevorzugt das Aluminiumhydroxid bilden sind Organosilanverbindungen mit folgendem Aufbau:

(R)₄₋ₙ --- Si --- Xₙ

mit n = 1, 2 oder 3.

X ist eine hydrolysierbare Gruppe, die mit der Oberfläche des Metallhydroxides reagiert, auch als Kupplungsgruppe bezeichnet. Bevorzugt ist der Rest R ein Kohlenwasserstoffrest und ist so ausgewählt, dass die Orgnosilanverbindung gut mit dem thermoplastischen Polyurethan mischbar ist. Der Rest R ist über eine hydrolytisch stabile Kohlenstoff-Silizium Verbindung mit dem Silicium verbunden und kann reaktiv sein oder inert. Ein Beispiel für einen reaktiven Rest, der bevorzugt ein ungesättigter Kohlenwasserstoffrest ist, ist ein Allylrest. Bevorzugt ist der Rest R inert, weiter bevorzugt ein gesättigter Kohlenstoffwasserstoffrest mit 2 bis 30 Kohlenstoffatomen, bevorzugt 6 bis 20 Kohlenstoffatomen und besonders bevorzugt 8 bis 18 Kohlenstoffatomen, weiter bevorzugt handelt es sich um einen aliphatischen Kohlenwasserstoffrest, der verzweigtkettig oder linear ist.

Weiter bevorzugt enthält die Organosilanverbindung nur einen Rest R und hat die allgemeine Formel:

R --- Si --- (X)₃

Bevorzugt ist die Kupplungsgruppe X ein Halogen, bevorzugt Chlor und demzufolge das Kupplungreaganz ein Tri-, Di- oder Monochlorsilan. Ebenfalls bevorzugt ist die Kupplungsgruppe X eine Alkoxy-Gruppe, bevorzugt eine Methoxy- oder eine Ethoxy-Gruppe. Ganz bevorzugt ist der Rest das Hexadecyl-Radikal, bevorzugt mit der Methoxy- oder Ethoxy-Kupplungsgruppe, somit ist das Organosilan das Hexadecysilan.

Die Silane werden mit 0,1 Gew.-% bis 5 Gew.-%, weiter bevorzugt 0,5 Gew.-% bis 1,5 Gew.-% und besonders bevorzugt mit ca. 1 Gew. % bezogen auf die Gesamtmenge des Metallhydroxides auf dieses aufgebracht. Carbonsäuren und -derivate werden mit 0,1 Gew.-% bis 5 Gew.-%, weitere bevorzugt mit 1,5 Gew. % bis 5 Gew. % und besonders bevorzugt mit 3 Gew.-% bis 5 Gew.-% bezogen auf die Gesamtmenge des Metallhydroxid auf dieses aufgebracht.

Von den teilweise mit einer Hülle umgebenen Metallhydroxiden haben bevorzugt mehr als 50 %, weiter bevorzugt mehr als 70 %, weiter bevorzugt mehr als 90 % eine maximale Ausdehnung von weniger als 10 µm, bevorzugt weniger als 5 µm, besonders bevorzugt weniger als 3 µm. Gleichzeitig haben mindestens 50 % der Teilchen, bevorzugt mindestens 70 %, weiter bevorzugt mindestens 90 % zumindest eine maximale Ausdehnung von mehr als 0,1 µm, weiter bevorzugt von mehr als 0,5 µm und besonders bevorzugt mehr als 1 µm.

Bevorzugt werden bei der Herstellung der erfindungsgemäßen thermoplastischen Polyurethane Metallhydroxide verwendet, die bereits beschichtet sind. Nur so können ungewünschte Nebenreaktionen der Beschichtungsmaterialien mit den Bestandteilen des thermoplastischen Polyurethans vermieden werden und der Vorteil der Verhinderung des oxidativen Abbaus des thermoplastischen Polyurethans kommt besonders gut zum Tragen. Weiter bevorzugt kann die Beschichtung des Metallhydroxides auch im Einfüllbereich des Extruders erfolgen, bevor in einem flussabwärts gelegenen Teil des Extruders das Polyurethan zugegeben wird.

Gemäß einer weiteren Ausführungsform betrifft die vorliegende Erfindung demgemäß auch eine Zusammensetzung enthaltend mindestens ein thermoplastisches Polyurethan, mindestens ein Metallhydroxid und mindestens ein phosphorhaltiges Flammschutzmittel, wobei das thermoplastische Polyurethan ein auf mindestens einem Diisocyanat und mindestens einem Polyesterdiol basierendes thermoplastisches Polyurethan ist, das ein gewichtsmittleres Molekulargewicht im Bereich von 50.000 g/mol bis 200.000 g/mol, gemessen mittels GPC, aufweist, wie zuvor beschrieben, wobei das Metallhydroxid zumindest teilweise von einer Hülle umgeben ist.

### Phosphorhaltige Flammschutzmittel

Die erfindungsgemäßen Zusammensetzungen enthalten mindestens ein phosphorhaltiges Flammschutzmittel. Erfindungsgemäß können prinzipiell alle bekannten phosphorhaltigen Flammschutzmittel für thermoplastische Polyurethane eingesetzt werden.

Bevorzugt werden im Rahmen der vorliegenden Erfindung Derivate der Phosphorsäure, Derivate der Phosphonsäure oder Derivate der Phosphinsäure oder Mischungen aus zwei oder mehreren dieser Derivate eingesetzt.

Demgemäß betrifft die vorliegende Erfindung gemäß einer weiteren Ausführungsform auch eine Zusammensetzung enthaltend mindestens ein thermoplastisches Polyurethan, mindestens ein Metallhydroxid und mindestens ein phosphorhaltiges Flammschutzmittel, wobei das thermoplastische Polyurethan ein auf mindestens einem Diisocyanat und mindestens einem Polyesterdiol basierendes thermoplastisches Polyurethan ist, das ein gewichtsmittleres Molekulargewicht im Bereich von 50.000 g/mol bis 200.000 g/mol, gemessen mittels GPC, aufweist, wie zuvor beschrieben, wobei das phosphorhaltige Flammschutzmittel ausgewählt ist aus der Gruppe bestehend aus Derivaten der Phosphorsäure, Derivaten der Phosphonsäure, Derivaten der Phosphinsäure und einer Mischung aus zwei oder mehr dieser Derivate.

Gemäß einer weiteren bevorzugten Ausführungsform ist das phosphorhaltige Flammschutzmittel bei 21 °C flüssig.

Bevorzugt handelt es sich bei den Derivaten der Phosphorsäure, Phosphonsäure oder Phosphinsäure um Salze mit organischem oder anorganischem Kation oder um organische Ester. Organische Ester sind Derivate der Phosphor-haltigen Säuren, bei denen zumindest ein direkt an den Phosphor gebundenes Sauerstoffatom mit einem organischen Rest verestert ist. In einer bevorzugten Ausführungsform handelt es sich bei dem organischen Ester um einen Alkylester, in einer anderen bevorzugten Ausführungsform um einen Arylester. Besonders bevorzugt sind alle Hydroxygruppen der entsprechenden Phosphor-haltigen Säure verestert.

Organische Phosphatester sind bevorzugt, besonders die Triester, der Phosphorsäure, wie Trialkylphosphate und insbesondere Triarylphosphate, wie zum Beispiel Triphenylphosphat.

Bevorzugt werden erfindungsgemäß als Flammschutzmittel für die thermoplastischen Polyurethane Phosphorsäureester der allgemeinen Formel (I) 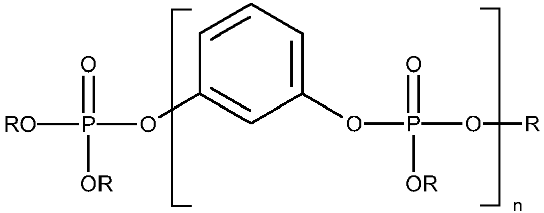 verwendet, wobei R für, gegebenenfalls substituierte, Alkyl-, Cycloalkyl- oder Phenylgruppen steht und n = 1 bis 15 bedeutet.

Steht R in der allgemeinen Formel (I) für einen Alkylrest, kommen insbesondere solche Alkylreste mit 1 bis 8 C-Atomen in Betracht. Als Beispiel für die Cycloalkylgruppen sei der Cyclohexyl-Rest genannt. Bevorzugt werden solche Phosphorsäureester der allgemeinen Formel (I) eingesetzt, bei denen R = Phenyl oder alkylsubstituiertes Phenyl bedeutet. n ist in der allgemeinen Formel (I) insbesondere 1 oder liegt vorzugsweise im Bereich von etwa 3 bis 6. Als Beispiele für die bevorzugten Phosphorsäureester der allgemeinen Formel (I) seien das 1,3-Phenylen-bis-(diphenyl)phosphat, das 1,3-Phenylen-bis-(dixylenyl)phosphat sowie die entsprechenden oligomeren Produkte mit einem mittleren Oligomerisierungsgrad von n = 3 bis 6 genannt. Ein bevorzugtes Resorcinol ist Resorcinol bis-diphenylphosphat (RDP), das üblicherweise in Oligomeren vorliegt.

Weitere bevorzugte phosphorhaltige Flammschutzmittel sind Bisphenol-A bis-(diphenylphosphat) (BDP), das üblicherweise als Oligomer vorliegt, und Diphenylkresylphosphat (DPK).

Demgemäß betrifft die vorliegende Erfindung gemäß einer weiteren Ausführungsform auch eine Zusammensetzung enthaltend mindestens ein thermoplastisches Polyurethan, mindestens ein Metallhydroxid und mindestens ein phosphorhaltiges Flammschutzmittel, wobei das thermoplastische Polyurethan ein auf mindestens einem Diisocyanat und mindestens einem Polyesterdiol basierendes thermoplastisches Polyurethan ist, das ein gewichtsmittleres Molekulargewicht im Bereich von 50.000 g/mol bis 200.000 g/mol, gemessen mittels GPC, aufweist, wie zuvor beschrieben, wobei das phosphorhaltige Flammschutzmittel ausgewählt ist aus der Gruppe bestehend aus der Gruppe bestehend aus Resorcinol bis-diphenylphosphat (RDP), Bisphenol-A bis-(diphenylphosphat) (BDP), und Diphenylkresylphosphat (DPK).

Bei den organischen Phosphonaten handelt es sich um Salze mit organischem oder anorganischem Kation oder um die Ester der Phosphonsäure. Bevorzugte Ester der Phosphonsäure sind die Diester von Alkyl- oder Phenylphosphonsäuren. Beispielhaft für die erfindungsgemäß als Flammschutzmittel einzusetzenden Phosphonsäureester seien die Phosphonate der allgemeinen Formel (II) 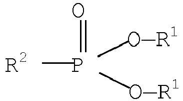 angeführt, wobei
- R¹: für gegebenenfalls substituierte, Alkyl-, Cycloalkyl- oder Phenylgruppen steht, wobei die beiden Reste R¹ auch cyclisch miteinander verknüpft sein können und
- R²:: für einen, gegebenenfalls substituierten, Alkyl-, Cycloalkyl- oder Phenylrest steht.

Besonders geeignet sind dabei cyclische Phosphonate wie z.B. 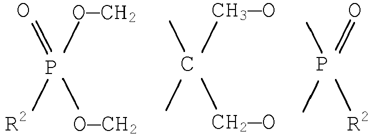 mit R² = CH₃ und C₆H₅, die sich vom Pentaerythrit ableiten, oder 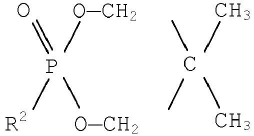 mit R² = CH₃ und C₆H₅, die sich vom Neopentylglykol ableiten, oder 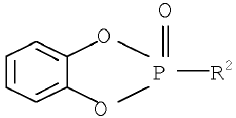 mit R² = CH₃ und C₆H₅, die sich vom Brenzkatechin ableiten, aber auch 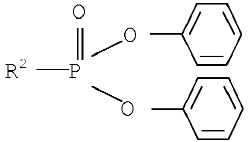 mit R² = einem unsubstituierten oder auch substituierten Phenylrest.

Phosphinsäureester haben die allgemeine Formel R¹R²(P=O)OR³, wobei alle drei organischen Gruppen R¹, R² und R³ gleich oder verschieden sein können. Die Reste R¹, R² und R³ sind entweder aliphatisch oder aromatisch und haben 1 bis 20 Kohlenstoffatome, bevorzugt 1 bis 10, weiter bevorzugt 1 bis 3. Bevorzugt ist zumindest einer der Reste aliphatisch, bevorzugt sind alle Reste aliphatisch, ganz besonders bevorzugt sind R¹ und R² Ethylreste. Weiter bevorzugt ist auch R³ ein Ethylrest oder ein Methylrest. In einer bevorzugten Ausführungsform sind R¹, R² und R³ gleichzeitig Ethylrest oder Methylreste.

Bevorzugt sind auch Phosphinate, d.h. die Salze der Phosphinsäure. Die Reste R¹ und R² sind entweder aliphatisch oder aromatisch und haben 1 bis 20 Kohlenstoffatome, bevorzugt 1 bis 10, weiter bevorzugt 1 bis 3. Bevorzugt ist zumindest einer der Reste aliphatisch, bevorzugt sind alle Reste aliphatisch, ganz besonders bevorzugt sind R¹ und R² Ethylreste. Bevorzugte Salze der Phosphinsäuren sind Aluminium-, Calcium- oder Zinksalze. Eine bevorzugte Ausführungsform ist Diethylaluminiumphosphinat.

Die phophorhaltigen Flammschutzmitteln, ihre Salze und/oder ihre Derivate werden in den erfindungsgemäßen Zusammensetzungen als Einzelsubstanz oder in Mischungen verwendet.

Im Rahmen der vorliegenden Erfindung wird das mindestens eine phosphorhaltige Flammschutzmittel in einer Menge eingesetzt, dass der Gehalt an Phosphor berechnet auf das gesamte phosphorhaltige Flammschutzmittel größer als 5 Gew.-%, weiter bevorzugt größer als 7 Gew.-% ist. Gleichzeitig ist der Gehalt an phosphorhaltigen Flammschutzmitteln in der Zusammensetzung beispielsweise geringer als 30 Gew.-%, bevorzugt kleiner als 20 Gew.-% und besonders bevorzugt kleiner als 15 Gew.-%. Bevorzugt ist das mindestens eine phosphorhaltige Flammschutzmittel in einer Menge im Bereich von 3 Gew.-% bis 30 Gew.-% enthalten, weiter bevorzugt im Bereich von 5 Gew.- % bis 20 Gew.- % und besonders bevorzugt im Bereich von 8 Gew.- % bis 15 Gew.- %, jeweils bezogen auf die gesamte Zusammensetzung.

Gemäß einer bevorzugten Ausführungsform enthält die erfindungsgemäße Zusammensetzung als phosphorhaltiges Flammschutzmittel Resorcinol bis-diphenylphosphat (RDP). Gemäß einer weiteren bevorzugten Ausführungsform enthält die erfindungsgemäße Zusammensetzung Aluminiumhydroxid und als phosphorhaltiges Flammschutzmittel Resorcinol bis-diphenylphosphat (RDP). Gemäß einer weiteren bevorzugten Ausführungsform enthält die erfindungsgemäße Zusammensetzung Aluminiumhydroxid und eine Schichtsilikat und/oder Hydrotalkit und als phosphorhaltiges Flammschutzmittel Resorcinol bis-diphenylphosphat (RDP).

Durch die Kombination der verschiedenen Flammschutzmittel werden mechanische Eigenschaften und Flammschutzeigenschaften auf die jeweilige Anforderung optimiert.

Gemäß der vorliegenden Erfindung werden das phosphorhaltige Flammschutzmittel, insbesondere die Phosphorsäureester, Phosphonsäureester und/oder Phospinsäureester und/oder deren Salze in Mischung zusammen mit mindestens einem Metallhydroxid als Flammschutzmittel eingesetzt. Dabei ist das Gewichtsverhältnis der Summe des Gewichts der eingesetzten Phosphatester, Phosphonatester und Phosphinatatester zu dem Gewicht des eingesetzten Metallhydroxid in der erfindungsgemäßen Zusammensetzung vorzugsweise im Bereich von 1:5 bis 1:2.

Weiterhin ist vorzugsweise das mindestens eine phosphorhaltige Flammschutzmittel in einer Menge im Bereich von 3 Gew.-% bis 30 Gew.-% enthalten, weiter bevorzugt im Bereich von 5 Gew.- % bis 20 Gew.- % und besonders bevorzugt im Bereich von 8 Gew.- % bis 15 Gew.- %, jeweils bezogen auf die gesamte Zusammensetzung.

Gleichzeitig ist das mindestens eine Metallhydroxid bevorzugt in einer Menge im Bereich von 10 Gew.-% bis 65 Gew. % bezogen auf die gesamte Zusammensetzung, bevorzugt im Bereich von 15 Gew.- % bis 50 Gew.- % und besonders bevorzugt im Bereich von 25 Gew.- % bis 40 Gew.-% enthalten, jeweils bezogen auf die gesamte Zusammensetzung.

Demgemäß betrifft die vorliegende Erfindung gemäß einer weiteren bevorzugten Ausführungsform auch eine Zusammensetzung enthaltend mindestens ein thermoplastisches Polyurethan, mindestens ein Metallhydroxid und mindestens ein phosphorhaltiges Flammschutzmittel, wobei das thermoplastische Polyurethan ein auf mindestens einem Diisocyanat und mindestens einem Polyesterdiol basierendes thermoplastisches Polyurethan ist, das ein gewichtsmittleres Molekulargewicht im Bereich von 50.000 g/mol bis 200.000 g/mol, gemessen mittels GPC, aufweist, wie zuvor beschrieben, wobei der Anteil des Metallhydroxids in der Zusammensetzung im Bereich von 10 bis 65 % bezogen auf die gesamte Zusammensetzung, liegt.

Gemäß einer weiteren bevorzugten Ausführungsform betrifft die vorliegende Erfindung auch eine Zusammensetzung enthaltend mindestens ein thermoplastisches Polyurethan, mindestens ein Metallhydroxid und mindestens ein phosphorhaltiges Flammschutzmittel, wobei das thermoplastische Polyurethan ein auf mindestens einem Diisocyanat und mindestens einem Polyesterdiol basierendes thermoplastisches Polyurethan ist, das ein gewichtsmittleres Molekulargewicht im Bereich von 50.000 g/mol bis 200.000 g/mol, gemessen mittels GPC, aufweist, wie zuvor beschrieben, wobei der Anteil des phosphorhaltigen Flammschutzmittels im Bereich von 3 bis 30 % bezogen auf die gesamte Zusammensetzung, liegt.

Gemäß einer weiteren bevorzugten Ausführungsform betrifft die vorliegende Erfindung damit auch eine Zusammensetzung enthaltend mindestens ein thermoplastisches Polyurethan, mindestens ein Metallhydroxid und mindestens ein phosphorhaltiges Flammschutzmittel, wobei das thermoplastische Polyurethan ein auf mindestens einem Diisocyanat und mindestens einem Polyesterdiol basierendes thermoplastisches Polyurethan ist, das ein gewichtsmittleres Molekulargewicht im Bereich von 50.000 g/mol bis 200.000 g/mol, gemessen mittels GPC, aufweist, wie zuvor beschrieben, wobei der Anteil des Metallhydroxids in der Zusammensetzung im Bereich von 10 bis 65 % bezogen auf die gesamte Zusammensetzung, liegt und der Anteil des phosphorhaltigen Flammschutzmittels im Bereich von 3 bis 30 % bezogen auf die gesamte Zusammensetzung, liegt.

Enthält die erfindungsgemäße Zusammensetzung mindestens ein Schichtsilikats oder Hydrotalkits oder Mischungen davon, ist vorzugsweise der Anteil der Summe der Gewichtsprozente (Gew.- %) des mindestens einen Metallhydroxids, des mindestens einen phosphorhaltigen Flammschutzmittels und des mindestens einen Schichtsilikats oder Hydrotalkits oder Mischungen davon, in Summe auch als Flammschutzmittel angesprochen, in der erfindungsgemäßen Zusammensetzung im Bereich von 10 Gew.- % bis 80 Gew.-%, bezogen auf die gesamte Zusammensetzung, bevorzugt im Bereich von 25 Gew.-% bis 70 Gew.-%, weiter bevorzugt im Bereich von 40 Gew.- % bis 60 Gew.- % und besonders bevorzugt im Bereich von 45 Gew.-% bis 55 Gew.-%.

Demgemäß betrifft die vorliegende Erfindung gemäß einer weiteren bevorzugten Ausführungsform auch eine Zusammensetzung enthaltend mindestens ein thermoplastisches Polyurethan, mindestens ein Metallhydroxid, mindestens ein phosphorhaltiges Flammschutzmittel und mindestens ein Schichtsilikat oder Hydrotalkit oder Mischungen davon, wobei das thermoplastische Polyurethan ein auf mindestens einem Diisocyanat und mindestens einem Polyesterdiol basierendes thermoplastisches Polyurethan ist, das ein gewichtsmittleres Molekulargewicht im Bereich von 50.000 g/mol bis 200.000 g/mol, gemessen mittels GPC, aufweist, wie zuvor beschrieben, wobei der Anteil der Summe der Gewichts-Anteile des mindestens einen Metallhydroxids, des mindestens einen phosphorhaltigen Flammschutzmittels und des mindestens einen Schichtsilikats oder Hydrotalkits oder Mischungen davon im Bereich von 10 bis 80 %, bezogen auf die gesamte Zusammensetzung, liegt.

Die Gewichtsanteile des mindestens einen phosphorhaltigen Flammschutzmittels zu Metallhydroxid zu dem mindestens einen Schichtsilkat oder Hydrotalkit oder der Mischung davon verhalten sich wie a zu b zu c, wobei a erfindungsgemäß beispielsweise im Bereich von 5 bis 15 variiert werden kann, b beispielsweise im Bereich von 30 bis 40 und c beispielsweise im Bereich von 0 bis 8, bevorzugt im Bereich von 3 bis 8. Weiter bevorzugt verhalten sich die Gewichtsanteile des mindestens einen phosphorhaltigen Flammschutzmittels zu Metallhydroxid zu dem mindestens einen Schichtsilkat oder Hydrotalkit oder der Mischung davon wie etwa 9 zu 34 zu 5.

Die vorliegende Erfindung betrifft auch die Verwendung der erfindungsgemäßen Zusammensetzung enthaltend mindestens ein flammgeschütztes thermoplastisches Polyurethane wie zuvor beschrieben, zur Herstellung von Beschichtung, Dämpfungselemente, Faltenbälge, Folien oder Fasern, Formkörpern, Fußböden für Gebäude und Transport, "non woven" Gewebe, bevorzugt Dichtungen, Rollen, Schuhsohlen, Schläuche, Kabel, Kabelstecker, Kabelummantelungen, Kissen, Laminate, Profile, Riemen, Sättel, Schäumen, Steckverbindungen, Schleppkabel, Solarmodule, Verkleidungen in Automobilen. Bevorzugt ist die Verwendung zur Herstellung von Kabelummantelungen. Die Herstellung erfolgt, bevorzugt aus Granulaten, durch Spritzguss, Kalandrieren, Pulversintern, oder Extrusion und/oder durch zusätzliches Schäumen der erfindungsgemäßen Zusammensetzung.

Demgemäß betrifft die vorliegende Erfindung auch die Verwendung einer Zusammensetzung enthaltend mindestens ein thermoplastisches Polyurethan, mindestens ein Metallhydroxid und mindestens ein phosphorhaltiges Flammschutzmittel, wobei das thermoplastische Polyurethan ein auf mindestens einem Diisocyanat und mindestens einem Polyesterdiol basierendes thermoplastisches Polyurethan ist, das ein gewichtsmittleres Molekulargewicht im Bereich von 50.000 g/mol bis 200.000 g/mol, gemessen mittels GPC, aufweist, wie zuvor beschrieben zur Herstellung von Kabelummantelungen.

Gemäß einer bevorzugten Ausführungsform betrifft die vorliegende Erfindung auch die Verwendung einer Zusammensetzung enthaltend mindestens ein thermoplastisches Polyurethan, mindestens ein Metallhydroxid, mindestens ein phosphorhaltiges Flammschutzmittel und mindestens ein Schichtsilikat oder Hydrotalkit oder Mischungen davon, wobei das thermoplastische Polyurethan ein auf mindestens einem Diisocyanat und mindestens einem Polyesterdiol basierendes thermoplastisches Polyurethan ist, das ein gewichtsmittleres Molekulargewicht im Bereich von 50.000 g/mol bis 200.000 g/mol, gemessen mittels GPC, aufweist, wie zuvor beschrieben zur Herstellung von Kabelummantelungen.

Weitere Ausführungsformen der vorliegenden Erfindung sind den Ansprüchen und den Beispielen zu entnehmen. Es versteht sich, dass die vorstehend genannten und die nachstehend erläuterten Merkmale des erfindungsgemäßen Gegenstandes/Verfahren/Verwendungen nicht nur in der jeweils angegebenen Kombination, sondern auch in anderen Kombinationen verwendbar sind, ohne den Rahmen der Erfindung zu verlassen. So ist z. B. auch die Kombination von einem bevorzugten Merkmal mit einem besonders bevorzugten Merkmal, oder eines nicht weiter charakterisierten Merkmals mit einem besonders bevorzugten Merkmal etc. implizit umfasst auch wenn diese Kombination nicht ausdrücklich erwähnt wird.

Die nachfolgenden Beispiele dienen der Veranschaulichung der Erfindung, sind aber in keiner Weise einschränkend hinsichtlich des Gegenstands der vorliegenden Erfindung.

### BEISPIELE

Die Beispiele zeigen die verbesserte Flammfestigkeit der erfindungsgemäßen Zusammensetzungen, sowie die guten mechanischen Eigenschaften und die Hydrolysebeständigkeit. Die Beispiele zeigen auch die guten Rauchgasdichten und die gute Alterungsbeständigkeit der erfindungsgemäßen Zusammensetzungen.

### 1. Herstellbeispiel

### 1.1 Allgemeine Vorschrift zur Molekulargewichtsbestimmung von thermoplastischen Urethanen:

Die Probe wird ca. 1%ig in (Dimethylformamid + 0,1% Dibutylamin) gelöst und anschließend mittels eines 0,45µm PTFE-Filter filtriert.

Für die GPC Messung wurden folgende Parameter eingestellt:

| | |
|---|---|
| GPC-Säulen: | PSS-Gel; 100A; 5µ; 300*8mm |
| | Jordi-Gel DVB; MixedBed; 5µ; 250*10mm |
| Säulentemperatur: | 60°C |
| Laufmittel: | Dimethylformamid (Multisolvent) |
| Fluss: | 1 mL/min |
| Detektor: | RI-Detektor |
| Kalibrierung: | konventionell gegen Polymethylmetacrylat (EasyCal; Fa. PSS, Mainz) |

### 1.2 Einsatzstoffe

Elastollan 1185A10: TPU der Shore Härte 85A der BASF Polyurethanes GmbH, Elastogranstrasse 60, 49448 Lemförde, basiert auf Polytetrahydrofuran (PTHF) mit einem Molekulargewicht (Mn) von 1000 Dalton, 1,4-Butandiol, MDI.

Elastollan A: TPU der Shore Härte 85A der BASF Polyurethanes GmbH, Elastogranstrasse 60, 49448 Lemförde, basiert auf Butandioladipatester mit einem Molekulargewicht (Mn) von 1000 Dalton, 1,4-Butandiol, MDI.

Martinal OL 104 LEO: Aluminiumhydroxid ohne Coating, Martinswerk GmbH, Kölner Strasse 110, 50127 Bergheim, Al(OH)₃-Gehalt [%] ≈ 99.4, Teilchengröße (Laserbeugung, Cilas) [µm] D50: 1.7 - 2.1; Spezifische Oberfläche (BET) [m²/g]: 3 - 5.

Nanofil 15: organisch modifiziertes nano-dispergierbares Schichtsilikat auf Basis natürlicher Bentonite, Rockwood Clay Additives GmbH, Stadtwaldstraße 44, D-85368 Moosburg, Pulver, mittlere Korngröße D50, d.h. mindestens 50 % der Teilchen sind kleiner als 40µm.

Fyrolflex RDP: Resorcinol bis (diphenyl phosphat), CAS #: 125997-21-9, Supresta Netherlands B.V., Office Park De Hoef, Hoefseweg 1, 3821 AE Amersfoort The Netherlands.

PolyTHF®polyether Diol 1000, BASF, ist ein difunktionelles, lineares, gesättigetes Polyetherol erhältlich durch Polymerisation von Tetrahydrofuran.
Butandiol-1,4, BASF, Reinheit min. 99,5%
Lupranat MET ®, BASF, 4,4' Diisocyanatodiphenylmethan
Basonat® H/100, BASF , Hexamethylendiisocyanat
Elastostab ® H01, BASF, polymeres Carbodiimid (Hdrolyse-Stabilisator)

### 1.3 Herstellung im Handgußverfahren

Die in der zugrundeliegenden Rezeptur festgelegte Menge Polyol und der Kettenverlängerer wird in der Weißblechdose eingewogen und kurz mit Stickstoff beschleiert. Die Dose wir mit einem Deckel verschlossen und im Heizschrank auf ca. 90°C aufgeheizt.

Ein weiterer Heizschrank zum Tempern der Schwarte wird auf 80 °C vorgeheizt. Die Teflonschale wird auf den Heiztisch gestellt und dieser auf 125°C eingestellt.

Die berechnete Menge an flüssigen Isocyanat wird durch Auslitern bestimmt. Dazu wird das flüssige Isocyanat (MDI wird mit einer Temperatur von ca. 48 °C ausgelitert) in einem PE-Becher eingewogen und innerhalb von 10s in einen PE-Becher ausgegossen. Anschließend wird der so entleerte Becher tariert und mit der berechneten Menge an Isocyanat befüllt. Im Fall von MDI wird dieser bei ca. 48°C im Heizschrank gelagert.

Zusätze wie Hydrolyseschutz, Antioxidans, etc. die bei RT als Feststoffe vorliegen, werden direkt eingewogen.

Das vorgeheizte Polyol wird auf einer Hebebühne unter den ruhenden Rührer gestellt. Anschließend wird das Reaktionsgefäß mit der Hebebühne soweit angehoben, bis die Rührblätter vollständig in das Polyol eintauchen.

Bevor der Rührmotor eingeschaltet wird, unbedingt darauf achten, dass sich der Drehzahlregler in der Nullstellung befindet. Anschließend wird die Drehzahl langsam hochgeregelt, so dass eine gute Durchmischung ohne Einrühren von Luft gewährleistet wird.

Anschließend werden Additive wie z.B. Antioxidantien in das Polyol gegeben.

Die Temperatur der Reaktionsmischung wird vorsichtig mit einem Heißluftfön auf 80°C eingestellt.

Falls erforderlich wird vor der Isocyanatzugabe Katalysator mit der Microliterspritze zur Reaktionsmischung dosiert. Bei 80 °C erfolgt nun die Zugabe von Isocyanat, indem die zuvor ausgeliterte Menge innerhalb von 10s in die Reaktionsmischung eingetragen wird. Durch Rückwaage erfolgt die Gewichtskontrolle. Abweichungen größer/kleiner 0,2 g von der Rezepturmenge werden dokumentiert. Mit der Zugabe des Isocyanats wird die Stoppuhr gestartet. Bei Erreichen von 110°C wird die Reaktionsmischung in die Teflonschalen, die auf 125°C vorgeheizt sind, ausgegossen.

10min nach Start der Stoppuhr wird die Schwarte vom Heiztisch genommen und anschließend für 15h im Heizschrank bei 80°C gelagert. Die ausgekühlte Schwarte wird in der Schneidmühle zerkleinert. Das Granulat wird nun für 3h bei 110°C getrocknet und trocken gelagert.

Grundsätzlich kann dieses Verfahren auf den Reaktionsextruder oder das Bandverfahren übertragen werden.

Rezeptur für Elastollan A bis F:

| | A | B | C | D | E | F |
|---|---|---|---|---|---|---|
| PTHF 1000 [g] | | | | | 5601 | 6953 |
| Butandioladipatester mit einem Molekulargewicht (Mn) von 1000 Dalton [g] | 1000 | | | | | |
| Ethylenglycolbutandioladipatester mit einem Molekulargewicht (Mn) von 2000Dalton [g] | | 6407 | | | | |
| Hexandiolbutandioladipatester mit einem Molekulargewicht (Mn) von 2000Dalton [g] | | | 6400 | 7584 | | |
| Lupranat MET [g] | 535 | 2819 | 2816 | | 3523 | |
| Basonat H [g] | | | | 1506 | | 2217 |
| Butandiol-1,4 [g] | 101 | 717 | 714 | 640 | 766 | 736 |
| Elastostab H01 [g] | 8 | 5 | 64 | 61 | | |

### 1.4 Herstellung der Prüfkörper

In der nachfolgenden Tabelle 1 werden Zusammensetzungen aufgeführt, in denen die einzelnen Einsatzstoffe in Gewichtsanteilen (GT) angegeben sind. Die Mischungen wurden jeweils mit einem Doppelwellen-extruder Typ ZE 40 A der Fa. Berstorff mit einer Verfahrensteillänge von 35 D unterteilt in 10 Gehäuse hergestellt und anschließend mit einem Einwellen-extruder Typ Arenz mit einer Dreizonenschnecke mit Mischteil (Schneckenverhältnis1:3) zu Folien mit einer Dicke von 1,6 mm extrudiert.

Die Prüfkörper für die Cone Messungen mit Abmessungen von 200x150x5mm wurden an einer Arburg 520S mit einem Schneckendurchmesser von 30 mm spritzgegossen (Zone1 - Zone 3 180°C, Zone 4-Zone 6 185°C). Die Platten wurden dann auf die für die Cone Messung nötige Größe gesägt.

**Tabelle 1**

| Versuchsnummer | | 1 | 2 | 3 | 4 | 5 | 6 | 7 | 8 |
|---|---|---|---|---|---|---|---|---|---|
| | Gewichtsteile | VB | egB | egB | egB | VB | egB | VB | egB |
| Elastollan A | [GT] | | 51 | | | | 51 | | |
| Elastollan B | [GT] | | | | 51 | | | | |
| Elastollan C | [GT] | | | 51 | | | | | |
| Elastollan D | [GT] | | | | | | | | 51 |
| Elastollan E | [GT] | 51 | | | | 51 | | | |
| Elastollan F | [GT] | | | | | | | 51 | |
| Fyrolflex RDP | [GT] | 10 | 10 | 10 | 10 | 11 | 11 | 10 | 10 |
| Nanofil 15 | [GT] | 5 | 5 | 5 | 5 | | | 5 | 5 |
| Martinal OL 104 LEO | [GT] | 34 | 34 | 34 | 34 | 38 | 38 | 34 | 34 |

| | | | | | | | | | |
|---|---|---|---|---|---|---|---|---|---|
| VB: Vergleichsbeispiel; egB: erfindungsgemäßes Beispiel | | | | | | | | | |

### 2. Beispiel - Flammwidrigkeit

Um die Flammwidrigkeit zu bewerten, wird ein Probekörper mit 5mm Dicke horizontal bei einer Strahlungsintensität von 35kW/m² im Cone Kalorimeter nach der ISO 5660 Teil 1 (2002-12) und Teil 2 geprüft. Die Ergebnisse sind in Tabelle 2 wiedergegeben.

**Tabelle 2**

| | Versuchsnummern: | | 1 | 2 | 3 | 4 | 5 | 6 | 7 | 8 |
|---|---|---|---|---|---|---|---|---|---|---|
| Eigenschaften | Vorschrift | Einheit | | | | | | | | |
| Zündzeitpunkt (Time to Ignition) | ISO 5660 Teil 1 | [s] | 70 | 92 | 77 | 76 | 91 | 97 | 41 | 79 |
| Gesamte Wärmefreisetzung (THR, Total Heat Release) | | [MJ/m²] | 129 | 104 | 105 | 109 | 120 | 103 | 140 | 123 |
| Maximale Wärmefreisetzung (PHRR, Peak of Heat Release Rate) | | [kW/m²] | 150 | 128 | 136 | 127 | 497 | 369 | 234 | 156 |
| MAHRE | | [kW/m²] | 116 | 96 | 101 | 87 | 259 | 190 | 169 | 107 |
| Residue | | [%] | 26 | 34 | 32 | 32 | 20 | 29 | 13 | 29 |
| Gesamte Rauchentwicklung definierte Fläche | | [m²/m²] | 4296 | 2607 | 2255 | 2181 | 5335 | 3169 | 3647 | 1796 |
| PHRR/tig | | | 2,14 | 1,39 | 1,77 | 1,67 | 5,46 | 3,80 | 5,71 | 1,97 |

Nach Petrella (Petrella R.V., The assessment of full scale fire hazards from cone calorimeter data, *Journal of Fire Science,* 12 (1994), p. 14) ist der Quotient aus maximaler Wärmefreisetzung und Zündzeitpunkt ein Maß dafür, wie das entsprechende Material zu einem schnell wachsenden Feuer beiträgt. Weiterhin ist die gesamte Wärmefreisetzung ein Maß dafür, wie das entsprechende Material zu einem lang anhaltenden Feuer beiträgt.

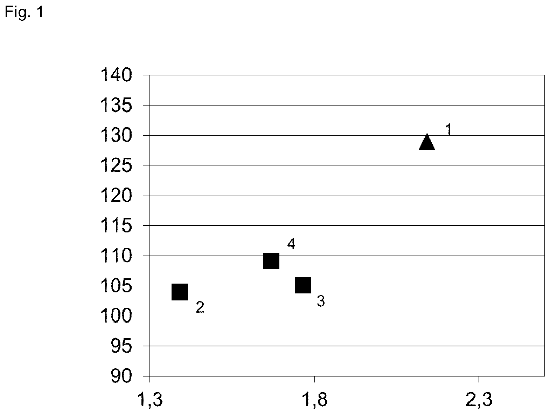

Die Ergebnisse der Cone Kalorimertermessungen der Mischungen 1 bis 8 wurden in einem Petrellaplot graphisch dargestellt, der jeweils in Fig. 1 bis Fig. 3 wiedergegeben ist. Dabei ist auf der x-Achse die Neigung des Materials aufgetragen, zu einem schnell wachsenden Feuer beizutragen (PHRR/t_{ig}⁻¹/kWm⁻²s⁻¹). Auf der y-Achse ist die Neigung des Materials aufgetragen, zu einem lang anhaltenden Feuer beizutragen (THE/MJm⁻²). Dabei weisen Materialien mit besseren Flammfestigkeiten möglichst kleine x und y Werte auf. Die Ergebnisse sind in der Tabelle 2 sowie dem jeweiligen Petrella Plot zusammengefasst.

Die erfindungsgemäßen Materialien haben eine höhere Flammfestigkeit. Die erfindungsgemäßen Mischungen weisen eine geringere Rauchgasdichte auf.

### 3. Beispiel - Mechanische Eigenschaften

Die Mischungen 1, 5 und 7 sind Vergleichsbeispiele, wobei ein thermoplastisches Polyurethan basierend auf Polyetherpolyol eingesetzt wurde.

Die Mischungen 2 bis 4, 6 und 8 sind erfindungsgemäß und zeigen, dass die erfindungsgemäßen Zusammensetzungen gute mechanische Eigenschaften aufweisen. Gemessen wurde die Zugfestigkeit bzw. Reissdehnung (gemäß DIN 53504) und die Shore Härte A (gemäß DIN 53505) der entsprechenden Probenkörper.

**Tabelle 3**

| | Versuchsnummer: | | 1 | 2 | 3 | 4 | 5 | 6 | 7 | 8 |
|---|---|---|---|---|---|---|---|---|---|---|
| Eigenschaften | Vorschrift | Einheit | | | | | | | | |
| Zugfestigkeit | DIN 53504 | [MPa] | 25 | 24 | 21 | 20 | 29 | 19 | 8 | 12 |
| Reißdehnung | | [%] | 580 | 610 | 670 | 610 | 680 | 490 | 360 | 540 |
| Shore Härte A | DIN 53505 | [MPa] | 86 | 88 | 87 | 87 | 86 | 87 | 88 | 88 |

### 4. Beispiel - Alterungsbeständigkeit

Um die oxidative Alterungsbeständigkeit zu bewerten, wird ein Probekörper bei 113 °C für 7 Tage bzw. bei 121°C für 7 Tage in einem Umluftofen gelagert und anschließend mechanische Parameter bestimmt. Die Ergebnisse sind in den nachfolgenden Tabellen 4 (Lagerung bei 113°C) und 5 (Lagerung bei 121°C) zusammengefasst.

**Tabelle 4**

| | Versuchsnummern: | | 1 | 2 | 4 |
|---|---|---|---|---|---|
| Eigenschaften | Vorschrift | Einheit | | | |
| Zugfestigkeit | DIN 53504 | [MPa] | 26 | 24 | 20 |
| Reißdehnung | | [%] | 660 | 610 | 610 |
| Zugfestigkeit | DIN 53504 | [MPa] | 16 | 20 | 16 |
| Änderung Zugfestigkeit | | [%] | -38 | -17 | -20 |
| Reißdehnung | DIN 53504 | [%] | 650 | 650 | 670 |
| Änderung Reißdehnung | | [%] | 14 | 7 | 10 |

**Tabelle 5**

| | Versuchsnummern: | | 1 | 2 | 4 |
|---|---|---|---|---|---|
| Eigenschaften | Vorschrift | Einheit | | | |
| Zugfestigkeit | DIN 53504 | [MPa] | 26 | 24 | 20 |
| Reißdehnung | | [%] | 660 | 610 | 610 |
| Zugfestigkeit | DIN 53504 | [MPa] | 10 | 16 | 12 |
| Änderung Zugfestigkeit | | [%] | -62 | -33 | -40 |
| Reißdehnung | DIN 53504 | [%] | 430 | 560 | 640 |
| Änderung Reißdehnung | | [%] | -35 | -8 | 5 |

Die Mischungen 2 und 4 sind erfindungsgemäß und zeigen, dass der Einsatz von Mischungen enthaltend TPU basierend auf Polyesterolen den Festigkeitsabfall durch Wärmebehandlung signifikant verringert, d.h. die oxidative Alterungsbeständigkeit deutlich verbessert.

### Kurze Beschreibung der Figuren:

- Fig. 1: zeigt die Ergebnisse der Cone Kalorimertermessungen der Mischungen 1 und 2 bis 4 in einem Petrellaplot. Dabei ist auf der x-Achse die Neigung des Materials aufgetragen, zu einem schnell wachsenden Feuer beizutragen (PHRR/t_{ig}⁻¹/kWm⁻²s⁻¹). Auf der y-Achse ist die Neigung des Materials aufgetragen, zu einem lang anhaltenden Feuer beizutragen (THE/MJm⁻²). Nach Petrella (Petrella R.V., The assessment of full scale fire hazards from cone calorimeter data, *Journal of Fire Science,* 12 (1994), p. 14) ist der Quotient aus maximaler Wärmefreisetzung und Zündzeitpunkt ein Maß dafür, dass das entsprechende Material zu einem schnell wachsenden Feuer beiträgt. Weiterhin ist die gesamte Wärmefreisetzung ein Maß dafür, wie das entsprechende Material zu einem lang anhaltenden Feuer beiträgt. Materialien mit besseren Flammfestigkeiten weisen möglichst kleine x und y Werte auf. Materialien 2 bis 4 (symbolisiert über das gefüllte Quadrat) weisen gegenüber Vergleichsmaterial 1 (symbolisiert über das gefüllte Dreieck) bessere Eigenschaften auf.

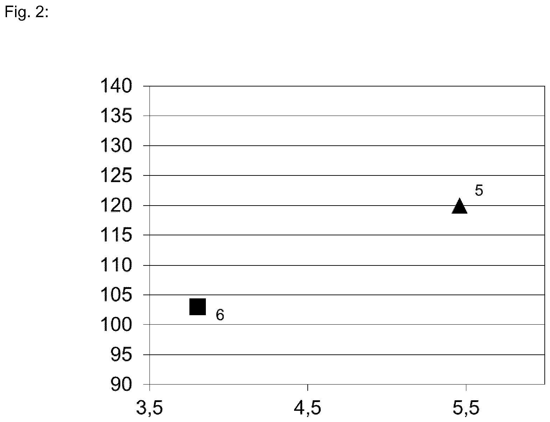

- Fig. 2: zeigt die Ergebnisse der Cone Kalorimertermessungen der Mischungen 5 und 6 in einem Petrellaplot. Dabei ist auf der x-Achse die Neigung des Materials aufgetragen, zu einem schnell wachsenden Feuer beizutragen (PHRR/t_{ig}⁻¹/kWm⁻²s⁻¹). Auf der y-Achse ist die Neigung des Materials aufgetragen, zu einem lang anhaltenden Feuer beizutragen (THE/MJm⁻²). Nach Petrella (Petrella R.V., The assessment of full scale fire hazards from cone calorimeter data, *Journal of Fire Science,* 12 (1994), p. 14) ist der Quotient aus maximaler Wärmefreisetzung und Zündzeitpunkt ein Maß dafür, dass das entsprechende Material zu einem schnell wachsenden Feuer beiträgt. Weiterhin ist die gesamte Wärmefreisetzung ein Maß dafür, wie das entsprechende Material zu einem lang anhaltenden Feuer beiträgt. Materialien mit besseren Flammfestigkeiten weisen möglichst kleine x und y Werte auf. Material 6 (symbolisiert über das gefüllte Quadrat) weist gegenüber Vergleichsmaterial 5 (symbolisiert über das gefüllte Dreieck) bessere Eigenschaften auf.

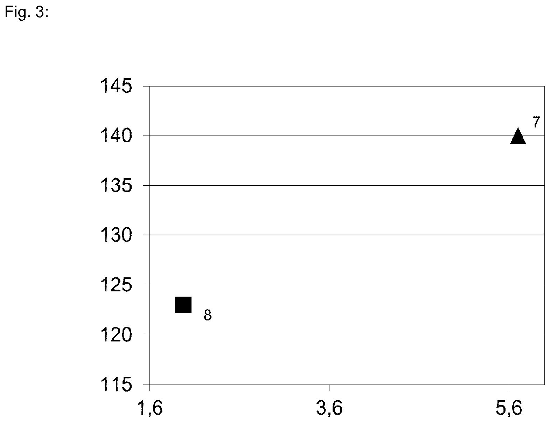

- Fig. 3: zeigt die Ergebnisse der Cone Kalorimertermessungen der Mischungen 7 und 8 in einem Petrellaplot. Dabei ist auf der x-Achse die Neigung des Materials aufgetragen, zu einem schnell wachsenden Feuer beizutragen (PHRR/t_{ig}⁻¹/kWm⁻²s⁻¹). Auf der y-Achse ist die Neigung des Materials aufgetragen, zu einem lang anhaltenden Feuer beizutragen (THE/MJm⁻²). Nach Petrella (Petrella R.V., The assessment of full scale fire hazards from cone calorimeter data, Journal of Fire Science, 12 (1994), p. 14) ist der Quotient aus maximaler Wärmefreisetzung und Zündzeitpunkt ein Maß dafür, dass das entsprechende Material zu einem schnell wachsenden Feuer beiträgt. Weiterhin ist die gesamte Wärmefreisetzung ein Maß dafür, wie das entsprechende Material zu einem lang anhaltenden Feuer beiträgt. Materialien mit besseren Flammfestigkeiten weisen möglichst kleine x und y Werte auf. Material 8 (symbolisiert über das gefüllte Quadrat) weist gegenüber Vergleichsmaterial 7 (symbolisiert über das gefüllte Dreieck) bessere Eigenschaften auf.

## Patentansprüche

1. Zusammensetzung enthaltend mindestens ein thermoplastisches Polyurethan, mindestens ein Metallhydroxid und mindestens ein phosphorhaltiges Flammschutzmittel, wobei das thermoplastische Polyurethan ein auf mindestens einem Diisocyanat und mindestens einem Polyesterdiol basierendes thermoplastisches Polyurethan ist, das ein gewichtsmittleres Molekulargewicht im Bereich von 50.000 g/mol bis 200.000 g/mol, gemessen mittels GPC, aufweist, wobei die Zusammensetzung mindestens ein Schichtsilikat oder Hydrotalkit oder Mischungen davon enthält.

2. Zusammensetzung gemäß Anspruch 1, wobei das Schichtsilikat ein organisch interkaliertes Schichtsilikat ist und/oder der Hydrotalkit ein organisch interkalierter Hydrotalkit ist.

3. Zusammensetzung gemäß einem der Ansprüche 1 oder 2, wobei das Schichtsilikat Bentonit ist.

4. Zusammensetzung gemäß einem der Ansprüche 1 bis 3, wobei das mindestens eine Schichtsilikat oder Hydrotalkit oder die Mischung davon in einer Menge im Bereich von 0,5 Gew.-% bis 20 Gew.-%, bezogen auf die gesamte Zusammensetzung, enthalten ist.

5. Zusammensetzung gemäß einem der Ansprüche 1 bis 4, wobei der Anteil der Summe der Gewichts-Anteile des mindestens einen Metallhydroxids, des mindestens einen phosphorhaltigen Flammschutzmittels und des mindestens einen Schichtsilikats oder Hydrotalkits oder Mischungen davon im Bereich von 10 bis 80 %, bezogen auf die gesamte Zusammensetzung, liegt.

6. Zusammensetzung gemäß einem der Ansprüche 1 bis 5, wobei das Polyesterdiol ausgewählt ist aus Polyesterdiolen aus ε-Caprolacton und Kondensationsprodukten von Adipinsäure oder Sebacinsäure mit mindestens einem Alkohol ausgewählt aus der Gruppe bestehend aus Ethylenglycol, Propandiol-1,3, Methylpropandiol-1,3, 1,4-Butandiol, 3-Methylpentandiol-1,5 oder 1,6-Hexandiol.

7. Zusammensetzung gemäß einem der Ansprüche 1 bis 6, wobei das Diisocyanat ein aromatisches Diisocyanat ist.

8. Zusammensetzung gemäß einem der Ansprüche 1 bis 7, wobei das thermoplastische Polyurethan ein gewichtsmittleres Molekulargewicht im Bereich von 90.000 g/mol bis 110.000 g/mol, gemessen mittels GPC, aufweist

9. Zusammensetzung gemäß einem der Ansprüche 1 bis 8, wobei die Zusammensetzung frei ist von anorganischen Oxiden von Magnesium, Calcium, Barium, Strontium, Bor, Aluminium und Zink.

10. Zusammensetzung gemäß einem der Ansprüche 1 bis 9, wobei das Metallhydroxid ausgewählt ist aus der Gruppe bestehend aus Aluminiumhydrexiden, Aluminiumoxidhydroxiden, Magnesiumhydroxid und einer Mischung aus zwei oder mehr dieser Hydroxide.

11. Zusammensetzung gemäß einem der Ansprüche 1 bis 10, wobei das Metallhydroxid Aluminiumhydroxid ist.

12. Zusammensetzung gemäß einem der Ansprüche 1 bis 11, wobei das Metallhydroxid zumindest teilweise von einer Hülle umgeben ist.

13. Zusammensetzung gemäß einem der Ansprüche 1 bis 12, wobei das phosphorhaltige Flammschutzmittel ausgewählt ist aus der Gruppe bestehend aus Derivaten der Phosphorsäure, Derivaten der Phosphonsäure, Derivaten der Phosphinsäure und einer Mischung aus zwei oder mehr dieser Derivate.

14. Zusammensetzung gemäß einem der Ansprüche 1 bis 13, wobei das phosphorhaltige Flammschutzmittel ausgewählt ist aus der Gruppe bestehend aus der Gruppe bestehend aus Resorcinol bis-diphenylphosphat (RDP), Bisphenol-A bis-(diphenylphosphat) (BDP), und Diphenylkresylphosphat (DPK).

15. Zusammensetzung gemäß einem der Ansprüche 1 bis 14, wobei der Anteil des Metallhydroxids in der Zusammensetzung im Bereich von 10 bis 65 % bezogen auf die gesamte Zusammensetzung, liegt.

16. Zusammensetzung gemäß einem der Ansprüche 1 bis 15, wobei der Anteil des phosphorhaltigen Flammschutzmittels im Bereich von 3 bis 30 % bezogen auf die gesamte Zusammensetzung, liegt.

17. Zusammensetzung gemäß einem der Ansprüche 1 bis 14, wobei der Anteil des Metallhydroxids in der Zusammensetzung im Bereich von 10 bis 65 % bezogen auf die gesamte Zusammensetzung, liegt und der Anteil des phosphorhaltigen Flammschutzmittels im Bereich von 3 bis 30 % bezogen auf die gesamte Zusammensetzung, liegt.

18. Verwendung einer Zusammensetzung gemäß einem der Ansprüche 1 bis 17 zur Herstellung von Kabelummantelungen.

## Claims

1. A composition comprising at least one thermoplastic polyurethane, at least one metal hydroxide, and at least one phosphorus-containing flame retardant, where the thermoplastic polyurethane is a thermoplastic polyurethane based on at least one diisocyanate and on at least one polyesterdiol, and has a weight-average molar mass in the range from 50 000 g/mol to 200 000 g/mol, measured by means of GPC, where the composition comprises at least one phyllosilicate or hydrotalcite, or a mixture thereof.

2. The composition according to claim 1, where the phyllosilicate is an organically intercalated phyllosilicate and/or the hydrotalcite is an organically intercalated hydrotalcite.

3. The composition according to claim 1 or 2, where the phyllosilicate is bentonite.

4. The composition according to any of claims 1 to 3, where the amount comprised of the at least one phyllosilicate or hydrotalcite, or of the mixture thereof, is in the range from 0.5% by weight to 20% by weight, based on the entire composition.

5. The composition according to any of claims 1 to 4, where the proportion of the total of the proportions by weight of the at least one metal hydroxide, of the at least one phosphorus-containing flame retardant, and of the at least one phyllosilicate or hydrotalcite, or a mixture thereof is in the range from 10 to 80%, based on the entire composition.

6. The composition according to any of claims 1 to 5, where the polyesterdiol is one selected from polyesterdiols made of ε-caprolactone and condensates of adipic or sebacic acid with at least one alcohol selected from the group consisting of ethylene glycol, 1,3-propanediol, methyl-1,3-propanediol, 1,4-butanediol, 3-methyl-1,5-pentanediol, and 1,6-hexanediol.

7. The composition according to any of claims 1 to 6, where the diisocyanate is an aromatic diisocyanate.

8. The composition according to any of claims 1 to 7, where the weight-average molar mass of the thermoplastic polyurethane is in the range from 90 000 g/mol to 110 000 g/mol, measured by means of GPC.

9. The composition according to any of claims 1 to 8, where the composition is free from inorganic oxides of magnesium, calcium, barium, strontium, boron, aluminum, and zinc.

10. The composition according to any of claims 1 to 9, where the metal hydroxide is one selected from the group consisting of aluminum hydroxides, aluminum oxide hydroxides, magnesium hydroxide, and mixtures of two or more of these hydroxides.

11. The composition according to any of claims 1 to 10, where the metal hydroxide is aluminum hydroxide.

12. The composition according to any of claims 1 to 11, where a coating surrounds the metal hydroxide at least to some extent.

13. The composition according to any of claims 1 to 12, where the phosphorus-containing flame retardant is one selected from the group consisting of derivatives of phosphoric acid, derivatives of phosphonic acid, derivatives of phosphinic acid, and mixtures of two or more of these derivatives.

14. The composition according to any of claims 1 to 13, where the phosphorus-containing flame retardant is one selected from the group consisting of resorcinol bis(diphenyl phosphate) (RDP), bisphenol A bis(diphenyl phosphate) (BDP), and diphenyl cresyl phosphate (DPC).

15. The composition according to any of claims 1 to 14, where the proportion of the metal hydroxide in the composition is in the range from 10 to 65%, based on the entire composition.

16. The composition according to any of claims 1 to 15, where the proportion of the phosphorus-containing flame retardant is in the range from 3 to 30%, based on the entire composition.

17. The composition according to any of claims 1 to 14, where the proportion of the metal hydroxide in the composition is in the range from 10 to 65%, based on the entire composition, and the proportion of the phosphorus-containing flame retardant is in the range from 3 to 30%, based on the entire composition.

18. The use of a composition according to any of claims 1 to 17 for producing cable sheathing.

## Revendications

1. Composition contenant au moins un polyuréthane thermoplastique, au moins un hydroxyde métallique et au moins un agent ignifuge contenant du phosphore, le polyuréthane thermoplastique étant un polyuréthane thermoplastique à base d'au moins un diisocyanate et d'au moins un polyesterdiol et présentant un poids moléculaire pondéral moyen dans la plage de 50.000 g/mole à 200.000 g/mole, mesuré par CPG, la composition contenant au moins un silicate à couches ou une hydrotalcite ou leurs mélanges.

2. Composition selon la revendication 1, le silicate à couches étant un silicate à couches organiquement intercalé et/ou l'hydrotalcite étant une hydrotalcite organiquement intercalée.

3. Composition selon l'une quelconque des revendications 1 ou 2, le silicate à couches étant de la bentonite.

4. Composition selon l'une quelconque des revendications 1 à 3, ledit au moins un silicate à couches ou hydrotalcite ou le mélange de ceux-ci étant contenu en une quantité dans la plage de 0,5% en poids à 20% en poids, par rapport à la composition totale.

5. Composition selon l'une quelconque des revendications 1 à 4, la proportion de la somme des proportions pondérales dudit au moins un hydroxyde métallique, dudit au moins un agent ignifuge contenant du phosphore et dudit au moins un silicate à couches ou hydrotalcite ou des mélanges de ceux-ci se situant dans la plage de 10 à 80%, par rapport à la composition totale.

6. Composition selon l'une quelconque des revendications 1 à 5, le polyesterdiol étant choisi parmi les polyesterdiols de l'ε-caprolactone et les produits de condensation de l'acide adipique ou de l'acide sébacique avec au moins un alcool choisi dans le groupe constitué par l'éthylèneglycol, le propanediol-1,3, le méthylpropanediol-1,3, le 1,4butanediol, le 3-méthylpentanediol-1,5 ou le 1,6hexanediol.

7. Composition selon l'une quelconque des revendications 1 à 6, le diisocyanate étant un diisocyanate aromatique.

8. Composition selon l'une quelconque des revendications 1 à 7, le polyuréthane thermoplastique présentant un poids moléculaire pondéral moyen dans la plage de 90.000 g/mole à 110.000 g/mole, mesuré par CPG.

9. Composition selon l'une quelconque des revendications 1 à 8, la composition étant exempte d'oxydes inorganiques du magnésium, du calcium, du baryum, du strontium, du bore, de l'aluminium et du zinc.

10. Composition selon l'une quelconque des revendications 1 à 9, l'hydroxyde métallique étant choisi dans le groupe constitué par les hydroxydes d'aluminium, les hydroxydes d'oxyde aluminium, l'hydroxyde de magnésium et un mélange de deux, ou plus, de ces hydroxydes.

11. Composition selon l'une quelconque des revendications 1 à 10, l'hydroxyde métallique étant l'hydroxyde d'aluminium.

12. Composition selon l'une quelconque des revendications 1 à 11, l'hydroxyde métallique étant entouré au moins partiellement par une enveloppe.

13. Composition selon l'une quelconque des revendications 1 à 12, l'agent ignifuge contenant du phosphore étant choisi dans le groupe constitué par les dérivés de l'acide phosphorique, les dérivés de l'acide phosphonique, les dérivés de l'acide phosphinique et un mélange de deux, ou plus, de ces dérivés.

14. Composition selon l'une quelconque des revendications 1 à 13, l'agent ignifuge contenant du phosphore étant choisi dans le groupe constitué par le résorcinol bisdiphénylphosphate (RDP), le bisphénol-A bis-(diphénylphosphate) (BDP) et le phosphate de diphénylcrésyle (DPK).

15. Composition selon l'une quelconque des revendications 1 à 14, la proportion de l'hydroxyde métallique dans la composition se situant dans la plage de 10 à 65%, par rapport à la composition totale.

16. Composition selon l'une quelconque des revendications 1 à 15, la proportion de l'agent ignifuge contenant du phosphore se situant dans la plage de 3 à 30%, par rapport à la composition totale.

17. Composition selon l'une quelconque des revendications 1 à 14, la proportion de l'hydroxyde métallique dans la composition se situant dans la plage de 10 à 65%, par rapport à la composition totale et la proportion de l'agent ignifuge contenant du phosphore se situant dans la plage de 3 à 30%, par rapport à la composition totale.

18. Utilisation d'une composition selon l'une quelconque des revendications 1 à 17 pour la préparation de gaines de câbles.
